# EUROPEAN PATENT SPECIFICATION

(11) **EP 2 995 040 B1**
(45) Date of publication and mention of the grant of the patent: **16.11.2022**
(21) Application number: 14794941.6
(22) Date of filing: 07.05.2014
(51) Int. Cl.: G06F 21/32, H04L 9/40

(54) **SYSTEMS AND METHODS FOR HIGH FIDELITY MULTI-MODAL OUT-OF-BAND BIOMETRIC AUTHENTICATION**
SYSTEME UND VERFAHREN FÜR HOCHZUVERLÄSSIGE BANDEXTERNER MULTIMODALE BIOMETRISCHE AUTHENTIFIZIERUNG
SYSTÈMES ET PROCÉDÉS DESTINÉS À L'AUTHENTIFICATION BIOMÉTRIQUE HORS BANDE MULTIMODE À HAUTE FIDÉLITÉ

(30) Priority: 08.05.2013 US 201361820917 P; 15.05.2013 US 201361823669 P; 03.06.2013 US 201313908618; 09.07.2013 US 201361844097 P; 12.07.2013 US 201313940799; 31.07.2013 US 201361860475 P; 21.08.2013 US 201313972556
(43) Date of publication of application: 16.03.2016
(73) Proprietor: JPMorgan Chase Bank, N.A., New York, NY 10179 (US)
(72) Inventor: KURSUN, Eren, New York, NY 10179 (US); FERNANDEZ, Gene, Holmdel, NJ, 07733 (US); BERSON, Alex, Sayton, NJ, 08810 (US); GOODMAN, Brian, Redding, CT, 06896 (US)
(74) Representative: Leonhard, Frank Reimund
(86) International application number: PCT/US2014/037106
(87) International publication number: WO 2014/182787

(56) References cited:
- EP-A1- 2 560 123
- WO-A1-2009/067738
- WO-A1-2012/173655
- WO-A2-2008/055181
- WO-A2-2012/164385
- US-A- 5 679 940
- US-A1- 2005 138 391
- US-A1- 2007 283 142
- US-A1- 2008 077 660
- US-A1- 2010 251 359
- US-A1- 2012 204 035
- US-B1- 7 523 067

## Description

The present invention generally relates to biometric authentication and, more particularly, to methods for high fidelity multi-modal out-of-band biometric authentication.

To access a company network or website, users generally enter a user name and password. A similar approach may be used when a user attempts to access an on-line account that the user may have with, for example, a financial institution, service/utility provider, etc. US7523067 anticipates an authentication method.

Methods for high fidelity multi-modal out-of-band biometric authentication are claimed. The invention is as defined in the appended claims.

For a more complete understanding of the present invention, the objects and advantages thereof, reference is now made to the following descriptions taken in connection with the accompanying drawings in which:
Figure 1 is a block diagram of a system for high fidelity multi-modal out-of-band biometric authentication according to one embodiment;
Figure 2 is a flowchart depicting a method for high fidelity multi-modal out-of-band biometric authentication according to one embodiment;
Figure 3 a flowchart depicting a method of authentication using touch and face recognition according to one embodiment;
Figure 4 a flowchart depicting an example of a facial image with markers according to one embodiment;
Figures 5A and 5B depict examples of tracing on facial images according to embodiments;
Figure 6 depicts an example of the entry of a signature on a facial image according to one embodiment;
Figure 7 a flowchart depicting a method of authenticating a mobile application using biometrics according to one embodiment;
Figure 8 a flowchart depicting a method of authenticating a transaction using biometrics according to one embodiment;
Figure 9 a flowchart depicting a composite biometric capture process according to one embodiment;
Figure 10 a flowchart depicting an authentication process for multi-user composite biometrics according to one embodiment;
Figure 11 a flowchart depicting an interactive biometric capture process according to one embodiment;
Figure 12 a flowchart depicting an authentication process involving integrated biometrics according to one embodiment; Figure 13 a flowchart depicting an exemplary iris capture method according to one embodiment;
Figure 14 is a flowchart depicting a method for automatically generating a user profile according to one embodiment;
Figure 15 is a flowchart depicting a method for manually generating a user profile according to one embodiment; and
Figure 16 is a flowchart depicting a method for high fidelity multi-modal out-of-band biometric authentication through vector-based multi-profile storage according to one embodiment; and
Figure 17 is a flowchart depicting a method for the creation of multiple profiles for a user according to one embodiment.
Figure 18 is a flowchart depicting a method for multi-modal out-of-band biometric authentication through fused cross-checking technique according to one embodiment;
Figure 19 is a flowchart depicting a method for multi-modal out-of-band biometric authentication through fused cross-checking technique according to another embodiment;
Figure 20 is a flowchart depicting a method of weighing potential spoof techniques according to one embodiment;
Figure 21 is a graphical representation of a method for multi-modal out-of-band biometric authentication through fused cross-checking technique according to another embodiment;
Figure 22 is a graphical representation of a method for multi-modal out-of-band biometric authentication through fused cross-checking technique according to another embodiment;
Figure 23 depicts a process flow of a high-risk transaction biometrics cross-checking process according to one embodiment; and
Figures 24A and 24B are graphical representations of aspects of a process flow of a high-risk transaction biometrics cross-checking process according to one embodiment.

### DETAILED DESCRIPTION OF PREFERRED EMBODIMENTS

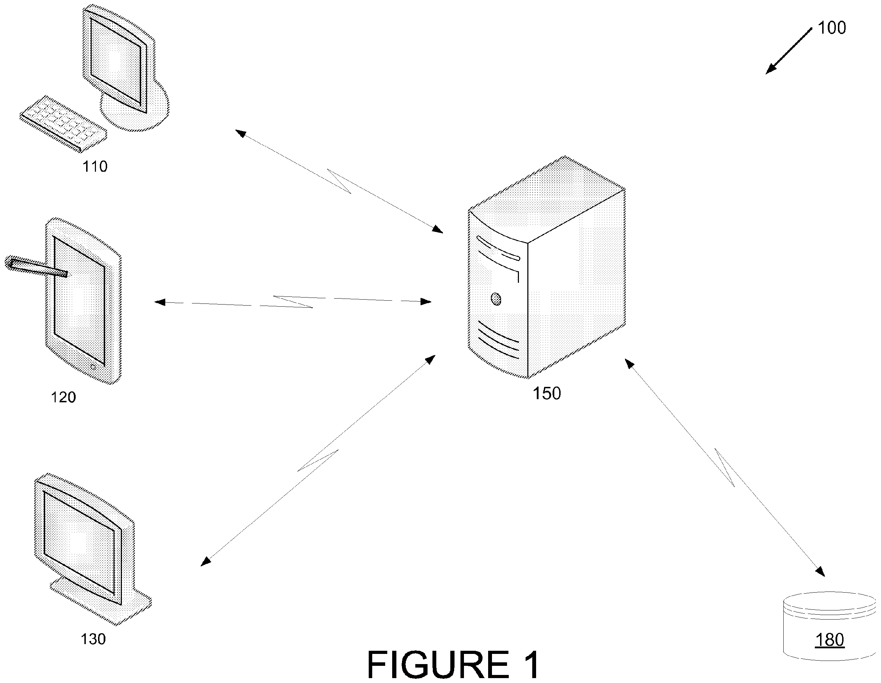

Several embodiments of the present invention and their advantages may be understood by referring to Figures 1-20, wherein like reference numerals refer to like elements.

Embodiments of the invention relate to a biometrics authentication process. This authentication may be used, for example, if a user seeks to access a network, to sign-in to an account, to authorize a certain transaction (e.g., a high risk/value transaction), to authorize access to a computer application, such as a mobile application, a computer program, etc. In one embodiment, a mobile device may be used to authenticate a user's access to an account on a desktop computer. For example, a code, such as a QR code, may be displayed on the screen of the desktop computer on which the user is seeking to access an account, conduct a transaction, etc. Using the user's registered mobile device, the user may "simultaneously" (i.e., within a predetermined short time period, such as 5 seconds) scan the QR code with the front-facing camera, take an image of the user's face, facial features (e.g., eyes, irises, etc.) with the rear-facing camera, and speak a verbal password for the microphone. The server may authenticate the user based on all three entries (e.g., code, facial image, voice biometric, etc.).

Other biometrics, such as iris recognition (using the rear-facing camera), finger print, retinal scan, DNA sample, palm print, hand geometry, odor/scent, gait, etc. may be used. In one embodiment, infrared cameras may be used to capture a user's thermal signature.

To authenticate a user using a mobile device in the absence of a desktop, a QR code may not be used. Facial recognition and a biometric, however, may still be entered "simultaneously." Other inputs, including gestures, touch patterns, etc. may be used as necessary and/or desired.

During the voice registration process, the server may record phrases, words, etc. These phrases may be used as recorded, or the words contained therein may be interchangeable. The system may account for variations in pronunciation based on the location of each word in the phrase.

Behavioral characteristics, such as the angle at which the user holds the mobile device, the distance from the user's face when taking an image, etc. may also be captured and used for authentication.

The server may also provide time stamping/geostamping to the phrase, such as having the user speak the current date/time, the user's location, an answer to a prompt provided by the mobile device, etc. The GPS location and server date/time may also be appended to the authorization request. This may not only be useful in the authorization process, but may also be useful in reducing fraudulent false claims.

Several biometrics may be combined into a single composite or integrated biometric. For example, a user may register several full biometrics (e.g., voice, finger print, signature, etc.) that may be combined into an integrated biometric, or the user may register an integrated biometric that is generated at the mobile device.

In another embodiment, an integrated biometric may not include a full biometric, but rather portions of several biometrics. When the user provides the biometric samples, only an integrate biometric may be transmitted for authentication. This may be used if limited bandwidth is available, or if the transmission of a full biometric is prohibited.

In certain environments, such as noisy environments, it may be difficult to accurately capture a voice sample for authentication. Alternatively, a user may not wish to provide a voice entry in public, or additional verification for a specific transaction, etc. Thus, other authentication methods, such as tracing a pattern over, for example, the image (live or static) of a user's face, highlighted portions of the user's face, using gestures such as blinking, touching lips, eyes, ears, etc. may be used. The user may also be presented with a signature space, the location and orientation of which may vary to prevent machine-generated signatures. The speed, pressure, etc. applied during the signature process may be captured as well to assist in authentication.

A user's profile may also identify delegates who may be able to authenticate the user if the user is unable to authenticate him or herself (*e.g*., the user has laryngitis or other ailment) or a biometrics match falls below a predetermined threshold. The delegate may also be required to be a registered user, and may have to authenticate him or herself before authenticating the user.

Referring to Figure 1, a block diagram of a system for high fidelity multi-modal out-of-band biometric authentication according to one embodiment is provided. System 100 includes workstation 110, which may be any suitable computer, including for example, desktop computers, laptop computers, notebook computers, etc.

System 100 may further include mobile electronic device 120. In one embodiment, mobile electronic device 120 may be a smartphone (e.g., Apple iPhone, Samsung Galaxy, etc.), a tablet computer (e.g., Apple iPad, Samsung Galaxy, Amazon Kindle, Barnes & Noble Nook Tablet, etc.), Google Glass, Smart E-watch/Bracelet, etc. In one embodiment, mobile electronic device 120 may include at least one camera for capturing a machine readable code (e.g., a bar code, QR code, etc.), a microphone, and a speaker. In one embodiment, mobile device 120 may include a front-facing camera and a rear-facing camera.

In one embodiment, system 100 may include screen 130 that may be part of an access control system for a secure area. Screen 130 may be part of an access control system that may be provided at the exterior of a secure area.

System 100 may include server 150. In one embodiment, server 150 may host an application that may be used to authenticate a user. Although only one server is depicted in Figure 1, more than one server may be provided. For example, a server for biometric authentication may be provided, a server for facial recognition may be provided, etc.

Database 180 may receive, store and/or maintain user information, account information, biometric information, etc.

Workstation 110, mobile electronic device 120 and screen 130 may communicate with server 150 over any suitable network, including the Internet, a local area network, wide area network, virtual private network, etc. In one embodiment, workstation 110 and mobile electronic device 120 and/or screen 130 may communicate with each other using any suitable communication protocol, including WiFi, Bluetooth, Near Field Communication, etc.

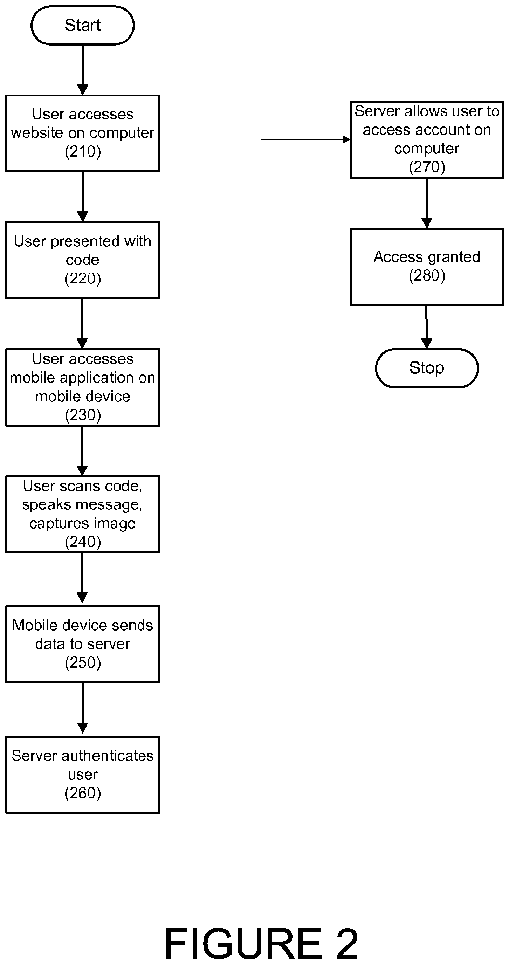

Referring to Figure 2, a method for high fidelity multi-modal out-of-band biometric authentication according to one embodiment is provided.

In step 210, the user may access a website. In one embodiment, the website may require the user to provide credentials before the user is granted access to the site.

In one embodiment, the user may access the website on a workstation, on a mobile device, on an access panel outside a secure area, etc. For convenience, embodiments will be described in the context of a "workstation," It should be appreciated, however, that this term encompasses desktop computers, notebook computers, laptop computers, access panels, etc.

The website may be any website that maintains an account for the user. For example, the website may be a company website that may require the user to log in. In another embodiment, the website may be for a financial institution with which the user has an account. In another embodiment, the website may be for a medical facility. The website may be used for any suitable business or organization as necessary and/or required.

In another embodiment, the website may be part of an organization's intranet or local area network.

In still another embodiment, the user may launch an authentication computer program or application, such as a mobile application on a mobile device.

For simplicity, the terms "computer program" and "mobile application" will be used interchangeably.

In step 220, the workstation may present the user with a code on the website. In one embodiment, the code may include a unique identifier that may link a browser session, access session, etc. to the user.

In one embodiment, the code may be a machine-readable code, such as a QR code, a bar code, an image, characters, etc. Any suitable code may be used as necessary and/or desired.

In one embodiment, the code may be provided on other devices that have access to the network, including other mobile devices, computers, tablets, televisions, monitors, etc. In one embodiment, the device that provides the code may be a "trusted" device (e.g., a registered device).

In one embodiment, the code may be provided as a RFID code, an audible code, an infrared code, etc.

In one embodiment, the code may be provided instead of a "traditional" log-in screen (e.g., enter a user name and password). In another embodiment, the code may be provided in addition to the traditional log-in information.

In another embodiment, the user may be presented with the code under certain circumstances. For example, the user may periodically be required to authenticate using the code. This may be done weekly, monthly, bi-weekly, whenever the user changes passwords, etc.

In another embodiment, the user may be required to provide authentication when he or she attempts to conduct a transaction with a risk level or value level above a predetermined threshold. For example, if the user attempts to transfer $5,000 from his or her account, the user may be required to provide additional authentication. As another example, if the user attempts to access an area of the website that requires additional security, the user may be required to provide additional authentication.

In one embodiment, the workstation may also provide data to the server. For example, the workstation may provide the session ID, user ID, and a biometrics to the server.

In step 230, if the user has not already accessed a computer program or mobile application, the user may access a mobile application on a mobile device. In one embodiment, the mobile application may provide an interface to receive the code and, for example, receive at least one image of the user and receive a biometric from the user.

In one embodiment, the user may be required to register the mobile device with the server before the mobile application may be used. In another embodiment, the mobile application may be accessed when the code is received. In still another embodiment, the mobile application may be a mobile website accessed on the mobile device.

In another embodiment, the server may push an invitation by, for example, email, text, etc. to a registered mobile device. The invitation may include a link for the user to access an on-line authentication website, a link to download a mobile application, etc.

In step 240, the user may provide the required data to the mobile device. In one embodiment, the user may first input the code, and then will have a predetermined amount of time to provide at least one additional data entry. For example, the user may have 5 seconds to take at least one image of the user's face, and to speak a letter, word, phrase, number, etc. for the mobile device to record.

In one embodiment, three data inputs may be required. The first data input may be the code, the second input may be an image of at least a portion of the user, and the third input may be a biometric of the user.

In one embodiment, the three inputs may be received using three different input devices on the mobile device. For example, the user may use the front-facing camera to scan the code, the rear-facing camera to take at least one image of the user while the microphone receives the voice data from the user. In another embodiment, a touch screen on the mobile device may be used to receive a touch-based biometric (e.g., a fingerprint) from the user. In still another embodiment, gyroscopes and other devices on the mobile device may be used to detect an angle of the mobile device when taking an image of the user, etc.

In one embodiment, after receiving the code, the mobile device may decode the code to access the unique identifier or other information that may be encoded in the code.

In one embodiment, if a voice biometric is captured, the mobile device may display the letter(s), number(s), word(s), phrase(s), etc. that the user is to speak. In one embodiment, an image may be provided, and the user may be prompted to speak the name of the object (e.g., a dog is displayed and the user says "dog.").

In one embodiment, the user may be requested to provide a variable response as part of the voice response, where "variable" means a response that differs from what has been trained or recorded. For example, the user may register certain words or phrases with the server. During authentication, however, the user may be asked to repeat words or phrases that differ from those that were registered. The server may analyze the entered voice and determine if the spoken voice matches the registered voice and expected/predicted behavior.

In one embodiment, the user may be prompted to speak a "secret" phrase or password/passcode. In one embodiment, the user may be requested to use the secret phrase in a sentence. For example, if the user's passcode is "fat cat," the user may say "I just saw a fat cat walk down the street." In another embodiment, the user may be prompted to give verbal commands (e.g., "I'd like to log in to my account") to the systems as a part of the voice authentication. This information may then be used to cross check if the actions arc consistent with verbal commands. In addition such natural language provides improved user experience.

In one embodiment, multiple, interchangeable words, numbers, phrases, etc. may be provided. In another embodiment, multiple passphrases may be extracted using training data set and may be rotated. For example, five different passphrases may be rotated, and two custom passphrases may be created based on trained data. The word "voice" is in the trained set used in combination with others for other custom phrases. In one embodiment, a combination and/or fusion of the previously described modalities may be used to match the speed/user experience characteristics, security levels, environmental conditions through machine learning techniques.

In another embodiment, for words that are not trained, the system may apply predictive-based techniques. Thus, if the user says "My voice is my password" instead of "My voice is my passphrase," the system can determine whether the word "password" meets the user's speech characteristics.

In still another embodiment, additional information to be provided or may be selected by the server. For example, the server may request a time stamp (e.g., date/time), a geo-stamp (e.g., the mobile device's location), a corporate/function stamp, an answer to server prompted question, etc. For example, the user may be requested to state the date, user's location, name of the user's employer, temperature, weather, stock quote, etc. The required additional information may be selected randomly, thereby decreasing the likelihood of an imposter being able to successfully use a recording.

In one embodiment, if the user does not complete the entry within a predetermined time, the entry process may stop. In one embodiment, the user may be given a limited number of attempts (e.g., 2 attempts) to enter data before a new code is required, an alternate logon is provided, etc. In another embodiment, after a predetermined number of unsuccessful logon attempts, the account may be locked or access may be otherwise restricted.

In step 250, the mobile device may provide the data to the server for verification. In one embodiment, each input (e.g., code, image(s), voice sample, etc.) may be provided to the server separately. In another embodiment, two or more of the inputs may be combined as to form an integrated sample.

Additional data may also be captured and provided to the server. For example, behavioral biometrics, such as the position (e.g., angle, distance from the face, etc.) that the user holds the mobile device may be determined. In another embodiment, characteristics of the user's speech (e.g., number of words/minute, intonation, etc.) may be determined. The GPS location of the mobile device may be provided. The time that the user took to enter all data may also be provided. In one embodiment, this data may be compared against previously-collected data to identify anomalies, outliers, etc., that may indicate fraud. In one embodiment, this data may be stored and future accesses may be compared against this data.

In step 260, the server may review the received data and authenticate the user, or decline access to the user. In one embodiment, any biometrics authentication may be performed by a biometrics server.

In one embodiment, the server may check with organization policies to make sure that use of biometric authentication is approved for granting access, authorizing a transaction, that the user is authorized based on the user's role to authorize the transaction, etc.

In one embodiment, the code may be verified. In one embodiment, this may include verifying the data in the code, checking the time that it took from the code being provided to the user to the completion of the data entry, etc. In one embodiment, session data from the code may be validated and/or verified.

In one embodiment, the voice data may be reviewed to see if it is consistent with stored voice data. Examples of suitable commercially-available voice authentication software include VoiceVault Fusion by VoiceVault, VoiceVerified by CSID, VocalPassword^{™} and FreeSpeech^{™} from Nuance.

In one embodiment, variations in the voice sample may be considered based on the location of a word, number, letter, etc. in a phase that is spoken. For example, a user may speak a word differently depending on where the word is located in a phrase (e.g., beginning versus end), the word(s) that is spoken before/after, etc. Thus, if the word is not in the same spot as in the registration sample, some variation may be expected.

In step 270, if the user is authenticated, the server may allow the user to access the account, webpage, secure area, authorize the transaction, etc. In one embodiment, the server may allow the user to bypass the traditional user name and password log-in. In another embodiment, the user may still provide the traditional login information.

In one embodiment, the data received may be stored in a database if it was successful, if it was unsuccessful, or both. Successful data may be used to refine the voice biometric data, face recognition data, etc. for future access. It may also be used to identify repeated attempts to access an account, and may be provided to the authorities as necessary.

In step 280, access may be granted to the workstation, mobile device, etc. In one embodiment, an application on the workstation, mobile device, etc. may periodically poll the server for authorization.

Modifications may be made in situations where the entry of a voice biometric may not be appropriate, may be undesirable, or may not be possible. For example, a user may be in a noisy environment, in a meeting, etc. or may not feel comfortable speaking his or her passphrase out loud. Thus, image/video-based authentication, such as facial recognition, may be used.

In another embodiment, modifications may be made when additional authentication is required for certain transactions.

For example, in one embodiment, the user may make at least one gesture during the image capture. For example, the user may touch or move his or her eyes, ears, nose, lips, or any other location that has been preselected by the user. In another embodiment, the user may be instructed to touch a certain point of his or her face by the mobile device. In another embodiment, the user may blink, wink a predetermined number of times, in a predetermined pattern, etc., make facial gestures (e.g., smile, frown, etc.). This real-time instruction may be used to reduce the possibility of an imposter capturing an image of a picture of the user.

In another embodiment, the user may touch or indicate at least one element or area on the captured image. For example, after image capture, the image may be displayed to the user with regions on the face being highlighted or otherwise indicated. The regions may be color coded by the face recognition algorithm. The user may select at least one region, trace a trail among several regions, etc.

In another embodiment, markers (e.g., dots or a similar indicator) may be provided on the image of the user, and the user may be requested to trace a registered pattern among the markers. In one embodiment, the user may be requested to trace a pattern over a live image/video of himself or herself in real-time.

In another embodiment, the user may sign his or her name on the screen while the front-facing camera captures an image or video of the user signing. In another embodiment, the user may sign a space that may be randomly located on an image of the user's face.

In still another embodiment, behavioral profiles may be considered. For example, a detailed profile of user behavior including markers such as the distance from the mobile device to the user's face, the direction/angle of the mobile device, background images, light/noise levels, etc. may be considered. In one embodiment, if the anomaly exists (e.g., the mobile device is much further from the face than any other prior validation, etc.) the authentication attempt may be denied.

In another embodiment, a physical gesture password may be used. For example, after an image is captured, the user may be presented with the image of the face with markers superimposed thereon. In one embodiment, the markers may be based on characteristics of the user's face (e.g., structure, location of features, etc.). In one embodiment the user may selectively zoom in/out of regions using, for example, touch-screen features to create alternative images/distortions of the image that may be sent to the server for authentication.

In one embodiment, the markers may be specifically created by the face recognition algorithm. As such, the markers are biometrically significant/specific to the user. The position of the markers may change based on the captured image of the user on the device screen, which is affected by the distance between the device/face, angle/tilt of the face, direction of the camera, etc.

In another embodiment, the markers may be positioned in an array. Any suitable relationship between the markers and the face, including no relationship, may be used as necessary and/or desired.

In another embodiment, the user may touch at least one area of the user's face (e.g., ears, nose, chin, or biometric marker highlighted area, etc.), may blink a certain number of times, may make lip movements, expressions, etc., without blinking, etc.

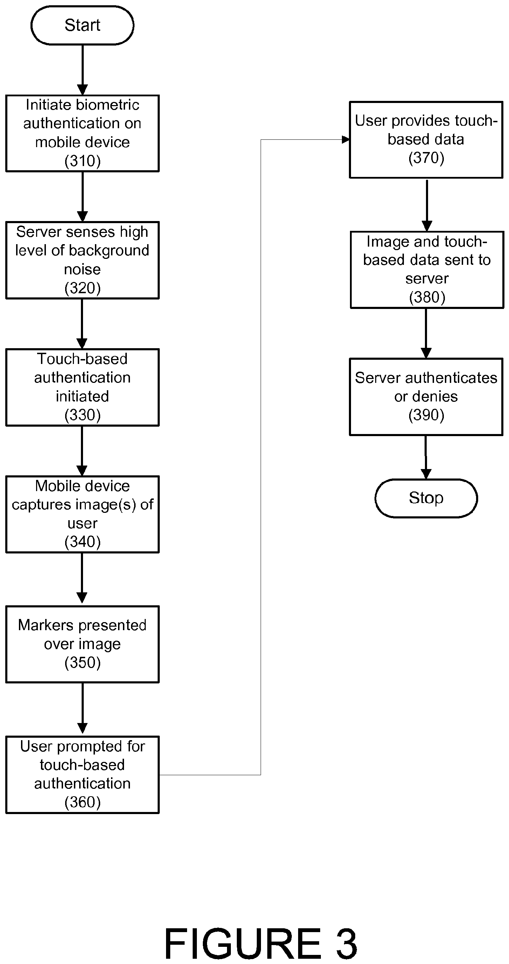

Referring to Figure 3, a method of authentication using touch and face recognition is provided. In step 310, the user may initiate biometric authentication on the user's mobile device.

In step 320, the server may sense a high level of background noise, thereby making voice-based authentication more difficult, undesirable, etc. In another embodiment, the user may determine that he or she does not wish to use voice-based authentication. In still another embodiment, the server may require additional authentication from the user.

In step 330, touch-based authentication may be initiated. In one embodiment, touch-based authentication may involve the user touching a captured image of himself or herself in at least one place, in a pattern, etc. In another embodiment, touch-based authentication may involve the user signing an area on the captured image. In still another embodiment, touch-based authentication may involve the user making a gesture by touching or otherwise indicating at least one area of the user's face during image capture.

In step 340, the mobile device may capture at least one image of the user. In one embodiment, the mobile device may capture a video of the user.

In one embodiment, a detailed profile may be acquired. For example, the device may capture background noise level/profile, lighting profile, GPS location of the mobile device, background image, etc. for anomaly detection.

In one embodiment, if gestures are used, the user may touch/indicate at least one area of the user's face during image capture.

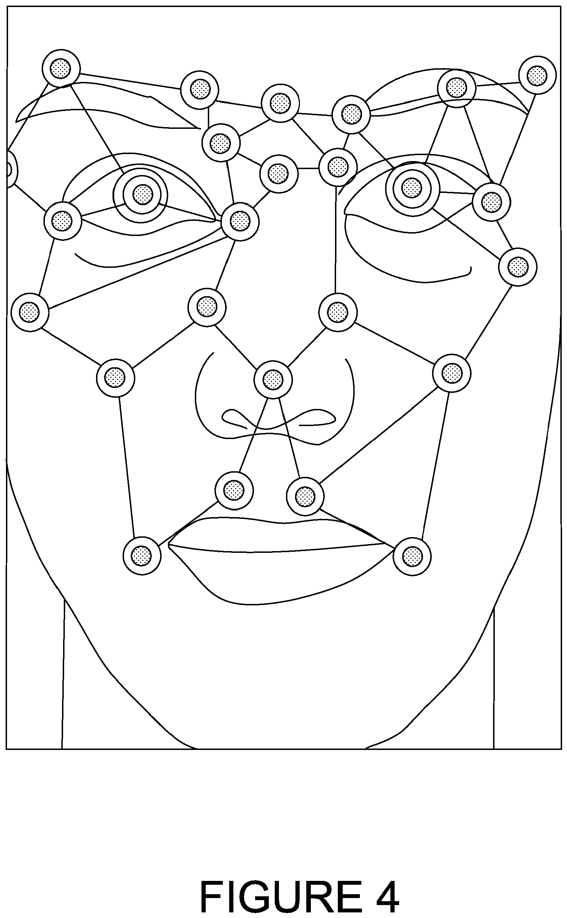

In step 350, the mobile device may present an image of the user on the screen of the mobile device. In one embodiment, markers may be superimposed over the image of the face. In one embodiment, the location of the markers may be based on the features of the user's face. For example, markers may be provided at the corners of the user's eyes, center of the eyes, eye brows, corners of the mouth, nose, cheeks, etc. An example of such markers are provided in Figure 4.

In another embodiment, the markers may be positioned independent of the facial features, and may present an array (e.g., a 4 by 4 array) or any random structure as necessary and/or desired.

In another embodiment, the user may be presented with an area to enter the user's signature on the image. In one embodiment, the size, location, and/or orientation of the signature area may vary so as to reduce the likelihood of imposters, robo-signatures, etc. In one embodiment, the speed of the signature, the pressure, and other signing characteristics may be captured and considered.

In one embodiment, the signature is required to fit a custom area marked by biometrics markers (i.e., aspect ratio, angle/tilt, size and other aspects of the signature have to be adjusted). This makes the process significantly difficult for imposters with previously captured signature profiles or cases where the imposter mimics signature manually.

In another embodiment, a signature space is not provided for the user on the image. Instead, the user pre-selects the markers that indicate the signature space, and enters his or her signature within that space. Thus, if the user does not know the markers, he or she will be unlikely to enter the signature in the proper area.

In step 360, the user may be prompted to provide the touch-based authentication. In one embodiment, if the user has multiple touch locations and/or patterns, the user may be reminded of the touch/pattern to enter.

In step 370, the user may provide the touch-based entry. For example, the user may touch at least one area of the face, at least one marker, etc. In another embodiment, the user may trace a pattern among the markers, areas, etc. Any suitable entry may be provided as necessary and/or desired.

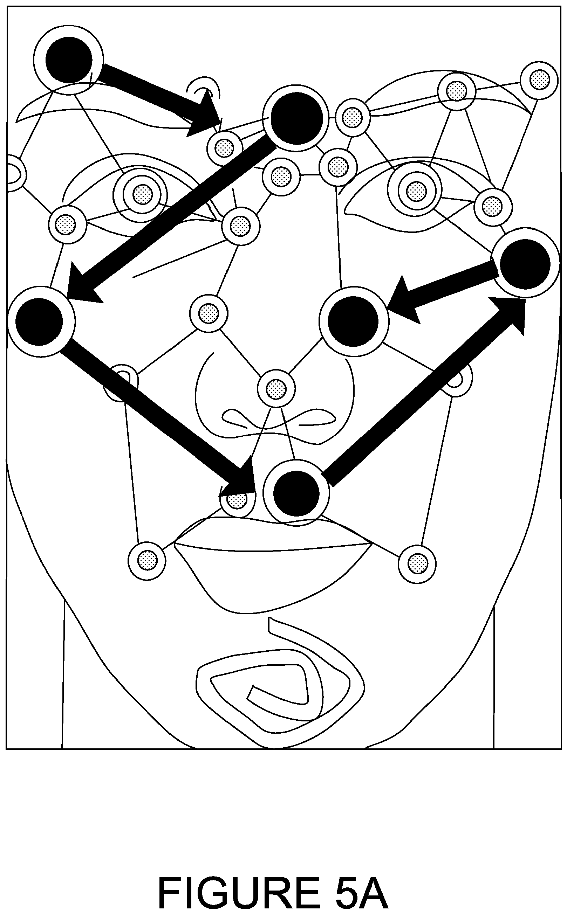

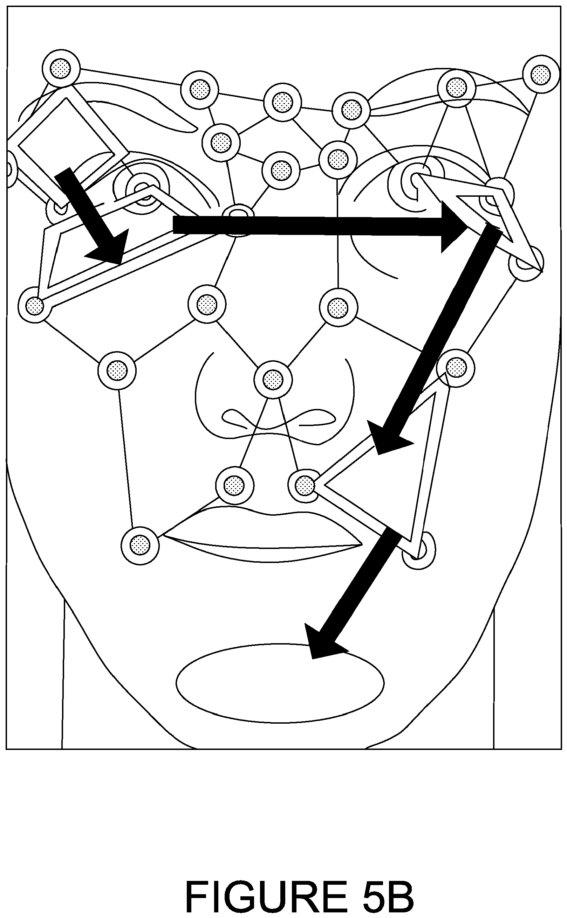

An example of tracing from marker to marker is provided in Figure 5A, while an example of tracing from different areas is provided in Figure 5B.

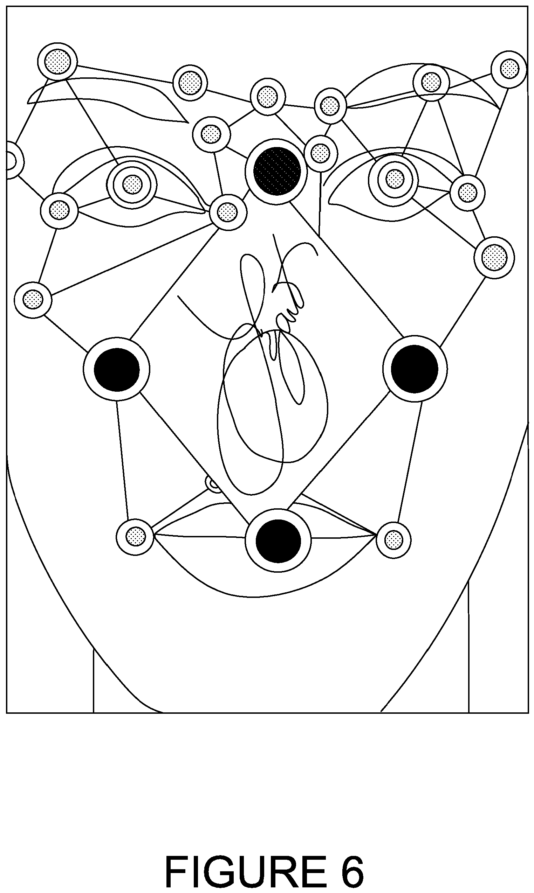

An example of a user entering a signature is provided in Figure 6.

In step 380, the image and the touch-based data may be provided to the server, and, in step 390, the server may authenticate or deny the user.

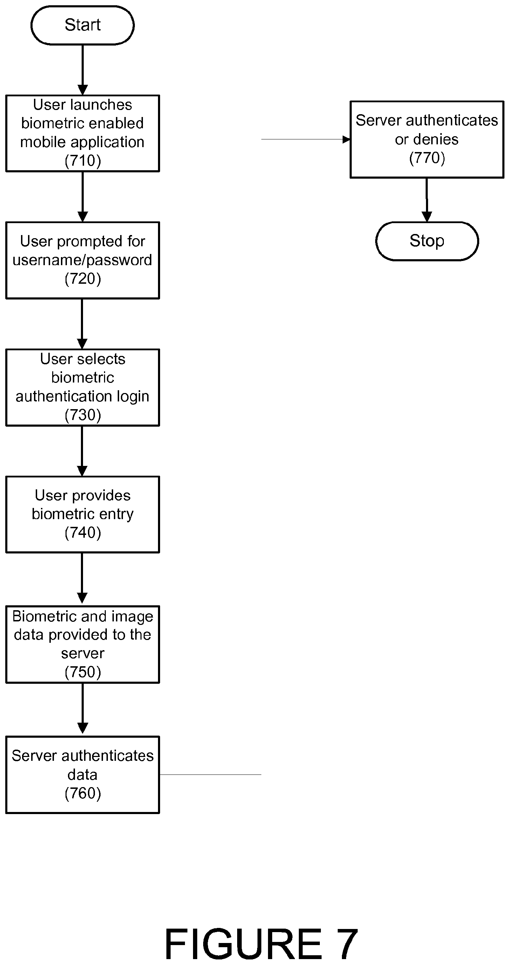

Referring to Figure 7, a method of authenticating a mobile application using biometrics is provided.

In step 710, the user may launch a biometric-enabled mobile application on a mobile device.

In step 720, the mobile application may prompt the user for traditional login information (e.g., username and password) or for biometric authentication.

In step 730, if the user selects biometric authentication, the mobile device may prompt the user for biometric entry.

In step 740, the user provides at least one biometric entry. In one embodiment, at least one image, video, etc. of at least a portion of the user (e.g., the user's face) may be captured. In another embodiment, a voice biometric may be captured. In still another embodiment, a touch-based biometric may be captured.

Combinations of images and biometrics may be captured as is necessary and/or desired.

In step 750, the mobile device may submit the captured data to the server. For example, in one embodiment, the biometric and image data may be submitted to the server.

In step 760, the server may authenticate the data.

In step 770, if the server authenticates the data, the user is logged in to the mobile application. Otherwise, access is denied.

In another embodiment, biometric authentication may be used on individual transactions. For example, for transactions that are above a pre-specified threshold, biometric authentication may be required. The threshold may be based on a value of the transaction, a risk of a transaction, an anomaly detection algorithm, a likelihood of fraud, etc. In one embodiment, the authentication may be requested by providing a mobile device with a machine readable code (e.g., QR code), near field communication, Bluetooth, etc.

In one embodiment, the use of biometric authentication may reduce the number of false fraud claims, as the biometric authentication is tied to the user (e.g., image, speech, signature, combinations thereof, etc.) may be tied or linked to the user providing authentication.

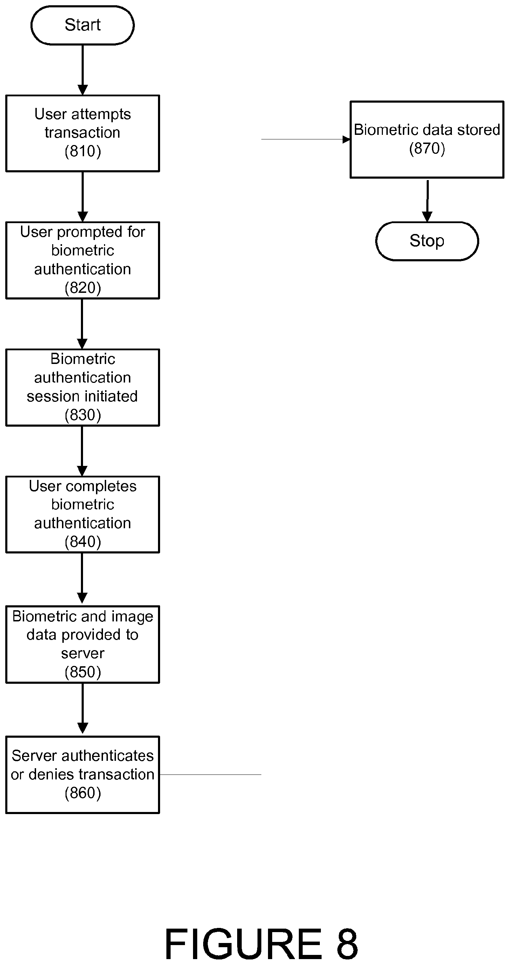

Referring to Figure 8, a method of authenticating a transaction is provided.

In step 810, a user may attempt a transaction that may exceed a predetermined threshold. The threshold may be based on a value of the transaction, a risk of a transaction, an anomaly detection algorithm, a likelihood of fraud, etc.

In step 820, the user is prompted for biometric authentication.

In step 830, a biometric authentication session is initiated on the mobile device.

In step 840, the user completes the biometric authentication. The level of biometric authentication may vary depending on the value of the transaction, amount of risk, etc.

In one embodiment, the biometric authentication session may be tied to the proposed transaction. For example, the user may be required to state "please execute transaction 556439." The user may further be required to provide a voice biometric or other biometric.

In step 850, the biometric and image data may be provided to the server.

In step 860, the server may authenticate or deny authentication, and therefore, the transaction.

In step 870, the biometric data is stored and associated with the transaction. For example, the captured image and signature, pattern, voice, etc. may be stored with the transaction file.

In one embodiment, the system may be retrained to address false rejections (e.g., rejections followed by successful password authentication). For example, after a certain number of false rejections (e.g., 2), the password authentication acquired biometrics may be incorporated with higher weight to retrain the biometrics system.

In one embodiment, the user can manually initiate a retraining session to address changes in behavior/appearance (e.g., glasses that will distort the eye biometrics, wearing contacts, surgery that alters the face biometrics markers, voice/health problems, etc.).

As discussed above, composite biometrics may be used. A composite biometric may be a combination of more than one biometric. In one embodiment, the composite biometric may include biometrics for more than one individual. For example, instead of storing and authenticating based on personal biometrics, composite images/profiles for groups of people (e.g. employees in the same group) with the same level of access may be created. Thus, in one embodiment, only composite biometrics are stored, sent, and received, rather than individual profiles.

In one embodiment, composites may be based on approval chains for transactions, shared geographic location, department, role, etc.

For similarly located persons, the proximity or relative locations of mobile devices in the group may be used.

Once the biometrics data is captured through a mobile device, the authentication process may match the user's captured data to the composites. In one embodiment, only differences from the composites are sent to the server. Thus, the mobile device may not need to store personalized biometrics, making it less susceptible to being compromised.

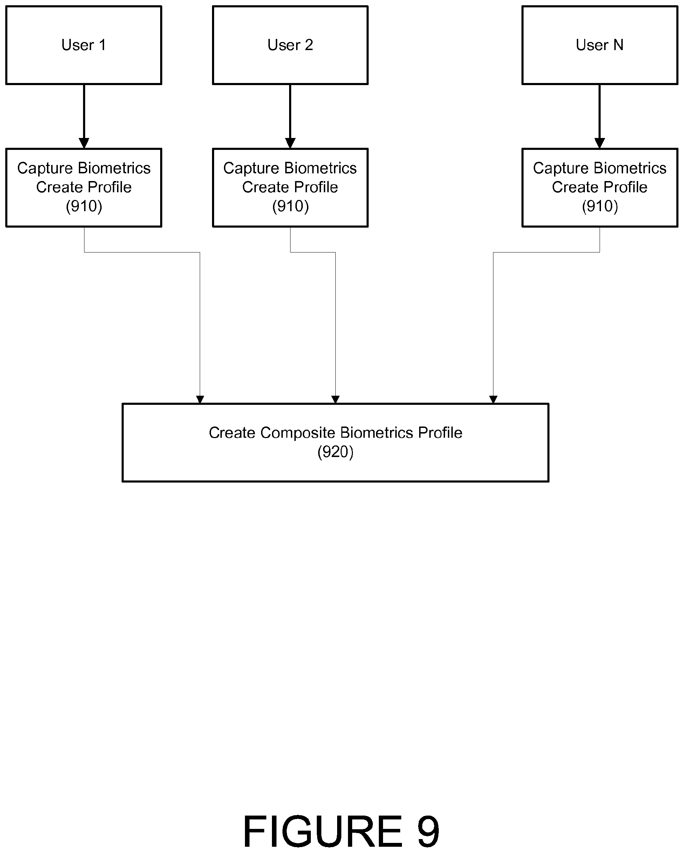

Referring to Figure 9, a composite biometric capture process is provided. First, in step 910, the biometrics for User 1 - User N are captured, and an individual profile is created. Next, in step 920, a composite biometrics profile for any group of User 1 - User N is created.

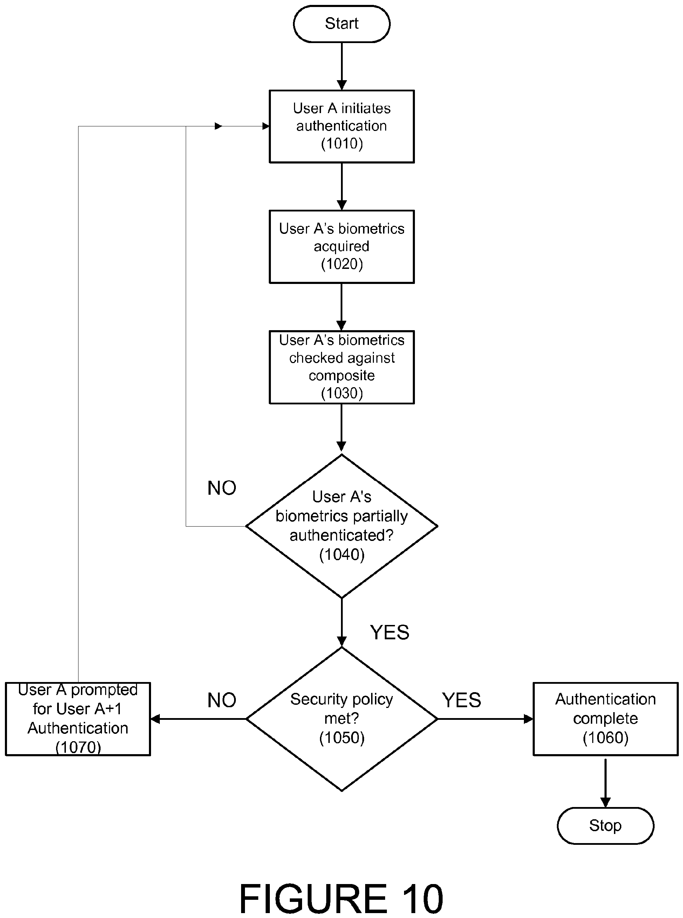

Referring to Figure 10, an authentication process for multi-user composite biometrics according to one embodiment is provided. In step 1010, User A initiates biometric authentication. In one embodiment, User A may be attempting to authenticate a transaction.

In step 1020, User A's biometrics may be acquired. In one embodiment, User A's biometric may be acquired using a mobile device as discussed herein.

In step 1030, User A's biometrics may be compared against a composite profile for a group. In one embodiment, individual biometrics may be checked against the composite biometrics vector through calculating delta function and match rates. User biometrics may be weighed based on, for example, the user's specific job role, transaction details, risk factors, environmental conditions and the quality of biometrics/confidence for the individual user.

In step 1040, if the User A's biometrics are not partially authenticated, the process may continue to recapture User A's biometrics.

If User A's biometrics are partially captured, the security policy may be checked. For example, a check may be made to ensure that User A has authority to authorize the transaction. In another embodiment, a check may be made to see if multiple users need to authorize the transaction. If, in step 1050, the security policy is met, then in step 1060, authorization is complete.

If the security policy is not met, in step 1070, User A is prompted for User A+1 to provide biometric authentication. This may involve getting someone higher on the chain to authorize the transaction, another person of the same level, etc.

In one embodiment, "interactive biometrics" may be used. In one embodiment, an integrated biometrics process may not focus on capturing or matching based on individual modalities of biometrics such as purely face recognition or voice recognition. Instead, it creates an integrated profile where key markers may be tied to each other to create integrated markers in a multi-dimensional spatio-temporal vector space.

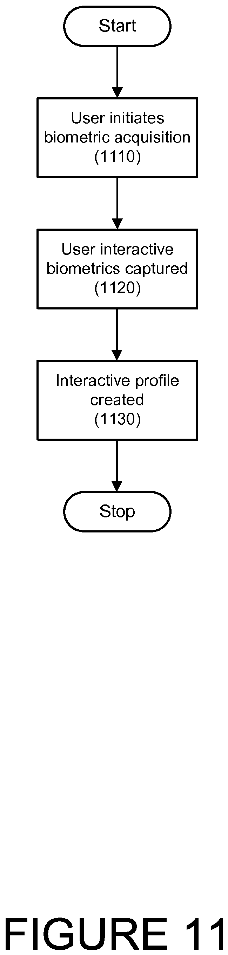

Referring to Figure 11, an interactive biometric capture process is disclosed. In step 1110, the user may initiate biometric acquisition.

In step 1120, the user's interactive biometrics may be captured. In one embodiment, the interactive process may be a fused capture where a free form interactive activity is translated to multiple fused biometrics profiles on the server end. A fused process may integrate and/or link multiple modalities and individual features for a user.

In one embodiment, biometrics markers may be spatio-temporally linked with respect to other markers and environmental parameters. Examples include (1) the user's facial biometrics markers while saying a selection of specific keywords; (2) the user's facial biometrics markers for facial expressions/gestures in response to the interactive process; (3) behavioral profile during face recognition (e.g., blinks), behavioral gestures during interactive process; (4) the distance between the user's face to mobile device to read a set of words from the screen; (5) the user's impulse response characteristics linked to, for example, pupil sizing, face biometrics, etc. when presented with familiar images or images that create behavioral response such as facial gestures; and (6) an image profile that may be linked to an infrared profile during interactive speech.

In one embodiment, the integrated biometrics process may identify key marker links among image/voice/behavioral, etc. data to create new features for authentication. For example, markers <1-N> in image , <x-y> in voice, <p-q> in behavioral profile may create a specific spatio-temporal pattern/feature during the interactive process that uniquely identifies the user across multiple biometrics planes.

In one embodiment, the process may execute with the user's attention. In another embodiment, the process may run in the background while the user performs other tasks.

The interactive process may capture biometrics, including for example, face biometrics, iris biometrics, voice biometrics, behavioral biometrics (through video recording), keyboard/touch screen usage , other forms of biometrics/behavioral profiles, etc.

In step 1130, a profile for the user is created. The resulting integrated profile may have partial biometrics for individual modalities, such a N features out of total M features for face recognition. Individual features in face recognition, however, may be linked to other modalities, such as voice/video based behavioral profiling, to environmental factors, etc.

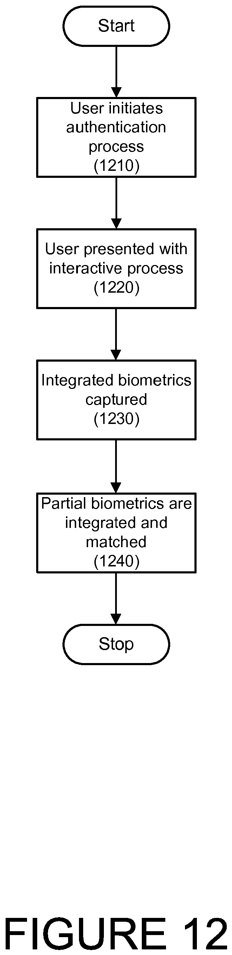

In Figure 12, an authentication process involving integrated biometrics according to one embodiment is provided.

In step 1210, the user may initiate an integrated biometrics authentication process. This may be done, for example, by using a mobile application executed on a mobile device.

In step 1220, the user is presented with an interactive process.

In step 1230, multiple biometrics and/or data are captured in an integrated process. In one embodiment, this process may capture a plurality of face biometrics, iris biometrics, voice biometrics, behavioral biometrics, keyboard/touch screen usage, and other biometrics/data as necessary and/or desired.

In one embodiment, as part of the acquisition, biometric features and data may be linked and analyzed with respect to each other and/or environmental factors, etc.

In step 1240, partial biometric features may be integrated and matched using, for example, corresponding matching scores. In one embodiment, the user may not be verified or authenticated in any individual modality, but rather though an integrated linked modality. This may provide higher levels of security against spoofing, imposters, etc.

In one embodiment, additional security features may be used. For example, multiple biometrics may be captured and/or recognized simultaneously. In one embodiment, a user's iris and face (and other modalities) may be recognized simultaneously. This may be accomplished using a mobile device's camera, for example. In another embodiment, Google Glass, or a similar device, may be used for iris recognition using a high-resolution image of one eye.

In another embodiment, simultaneous face recognition and finger printing may be used. For example, thin film technology may be used to allow finger print authentication using the mobile device touch screen. This enables simultaneous face recognition and finger printing, where the fingerprint and face biometrics are captured by user simply holding the mobile device.

In one embodiment, customizable fused partial modes may be based on a user's geographical location and available biometrics data. For example, partial face recognition (using eye area) with voice recognition may be used. This may be useful in areas where the use of full biometrics is not permitted.

In one embodiment, the use of full, partial, composite, etc. biometrics may be based on user preferences. In one embodiment, the user preferences may be set by the user, based on the user's calendar, based on the GPS location of the mobile device, etc.

In one embodiment, machine learning based techniques may be used to determine the modalities, thresholds, algorithms, etc. that are best fitted to be used in that specific session based on a multi-dimensional vector including user preferences, security settings, environmental factors, transaction characteristics, etc.

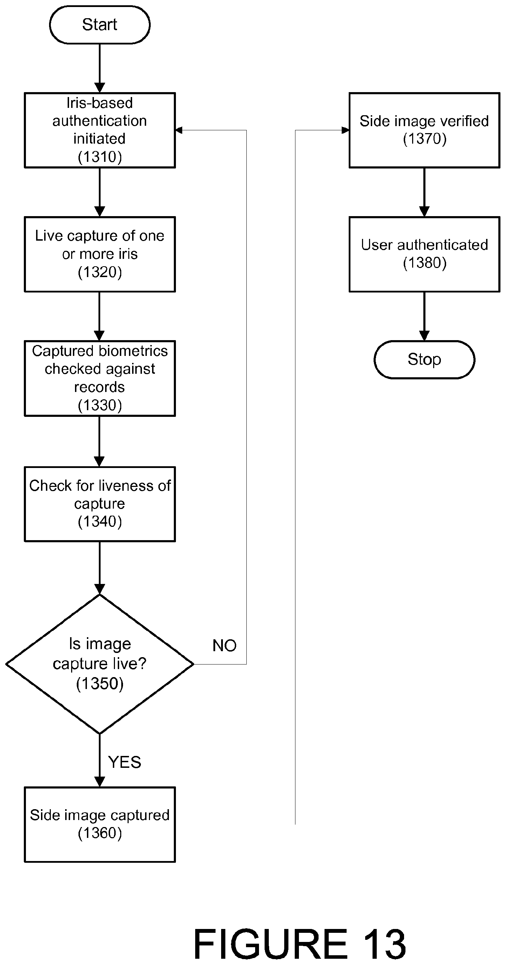

Referring to Figure 13, a flowchart depicting an iris recognition technique according to one embodiment is disclosed. In one embodiment, iris recognition may be a part of any of the authentication processes disclosed herein. In another embodiment, iris authentication may be a stand-alone process.

In step 1310, an iris-based authentication process is initiated. In one embodiment, iris authentication may be a stand-alone authentication procedure. In another embodiment, iris authentication may be part of a larger authentication process.

In step 1320, an image, video, etc. of one or both of the user's irises may be captured. In one embodiment, the iris capture may be performed by the user's mobile electronic device. In another embodiment, the iris capture may be performed by a camera provided for a desktop or notebook computer. In still another embodiment, the iris capture may be performed using any suitable camera, such as a security camera.

In one embodiment, the image or video may be captured sequentially (i.e., one after the other). In another embodiment, the image or video capture may be performed in parallel (i.e., both irises at the same time).

In step 1330, the captured image may be compared to iris information in a database. In one embodiment, this comparison may be performed by the mobile device sending some, or all, of the image data to a server. In another embodiment, this comparison may be made at the mobile device.

In one embodiment, anomaly detection may be performed on the captured image/video. In one embodiment, this may involve checking the size of the irises with eye-region biometrics from the user's profile, prior authentications, etc. Other anomaly detections may be performed as necessary and/or desired.

In step 1340, the mobile device and/or server may determine if the captured image, video, etc. is a live image, video, etc. In one embodiment, this may be performed by instructing the user, via the user's mobile device or suitable interface, to look up, look down, cross eyes, etc. In one embodiment, the user may have a limited time (e.g., 2 seconds) to respond as directed.

In another embodiment, different lighting may be used to check for a live image. For example, multiple images and/or video may be used to detect the change in pupil size in response to different lighting. In general, the size of the change in pupil size is proportional to the level of lighting change. Thus, in one embodiment, the lighting level and the pupil size may be determined for different lighting levels.

In one embodiment, the user's mobile device may use its flash, change the brightness of its screen, etc. to cause a change in lighting level.

In one embodiment, a check may be made to see if the image of the compressed or decompressed iris is consistent with the user profile, a stored image, etc. For example, the compressed or decompressed iris image may be a systematically distorted version of the original image, where different features are distorted with different scaling factors based on their location. The distortion may be calculated based on an elastic band model, can be matched against a profile, etc. For matching, the user can be profiled with different lighting conditions such that the system acquires a number of dilation factors (e.g. 25%, 50%, 75%, 100%).

In one embodiment, the images/video may be checked to determine if the user is wearing colored contact lenses. In one embodiment, a check may be made for a detectable pattern in the inner circle of the iris. In another embodiment, a check may be made for pattern changes with different lighting. In another embodiment, a check may be made for outer periphery effects of color contacts, whether there are detectable ring shadows around the iris, etc. In still another embodiment, a blinking test may be performed to determine if the iris is moving relative to the rest of the patterns during/after blinking. Other checks, combinations of checks, etc. may be used as necessary and/or desired.

In one embodiment, an IR image/video may be used check the image/video of the irises. In one embodiment, the IR image/video may be checked against historical data.

In step 1350, if the capture is live, in step 1360, a side image, video, etc. of the iris may be captured.

If the image is not a live image, the process may start over. In another embodiment, the account may be locked. This may occur after, for example, one failed attempt, a certain number of failed attempts, etc.

In step 1370, the side image may be verified. In one embodiment, the system may check for the clarity, transparency, etc. of the side view of cornea. In one embodiment, biometrics data for the cornea may be verified. In still another embodiment, if color contact lenses are detected, a check is made to determine if the color contacts block the light in the side view.

In step 1380, if the side image is verified, the user may be authenticated. In another embodiment, the user may proceed to additional authentication (biometrics and otherwise) as necessary and/or desired.

In one embodiment, a user may have a plurality of profiles. For example, different profiles may account for the use of different devices that may have different camera types, different camera resolutions, etc. (e.g., Apple iPhone versus Samsung Galaxy). The different profiles may account for changes in an individual's physical appearance, such as sometimes wearing glasses/sunglasses, wearing makeup, growing facial hair, etc. The different profiles may also account for different environments (different lighting, different background noise levels, etc.). The different profiles may account for occasional changes in an individual's voice due to allergies, different seasons, different times of day, etc. Any suitable profiles, and combinations thereof, may be used as necessary and/or desired.

In one embodiment, multiple profiles may be created by the individual to capture any of the above, and any other necessary and/or desired, variations. The multiple profiles may be created at one time (e.g., a user creates a profile without wearing eyeglasses, and then creates a profile while wearing eyeglasses), or may be created over a period of time (e.g., captured during multiple visits). In one embodiment, the profiles may be captured as part of a historical capture of biometrics data from the user. In other words, the user may not need to specifically create a biometrics profile, but instead the profile may be created automatically as variations are detected during successful access attempts. For example, a new profile may be automatically created and maintained by the system as it gradually emerges from successful authentication attempts. By clustering the data automatically, the system may identify and/or create a new profile.

In another embodiment, the user may be required to create a new profile after an unsuccessful biometrics attempt due to a change in biometrics if certain matching thresholds are met. This may be after one unsuccessful attempt, multiple unsuccessful attempts, etc. In one embodiment, this may require additional security screening, such as checks of other biometrics, security administrator approval, password-based authentication, etc.

In one embodiment, the user may have n different profiles. In one embodiment, the n profiles may contain a single data point, or it may include a "cluster" of biometric data based on authentication attempts having a statistically significant correlation level. For example, a cluster may contain data for authentication attempts that involved the user wearing glasses. The data in that cluster may be different from data in a cluster where the user is not wearing glasses. Thus, within each cluster, the data may be consistent up to a certain threshold, and may differ substantially only in certain respects.

For example, profile 1 may be a cluster of a user profiles with the user wearing glasses. Profile 2 may be a cluster of historical user profile data and a device having certain specifications. Profile 3 may be a cluster user of profiles where the user has a cold and a different voice profile. Profile n may be a cluster of user profiles using a specific device that may deviate from other profiles. Other profiles may be used as is necessary and/or desired.

In one embodiment, as profiles are created, environmental factors, such as lighting, noise, device variations, etc. may be captured and stored.

In one embodiment, each of the n profiles may be associated with a customized selection of algorithms, thresholds, biometrics markers, etc. There may be a collection of biometrics algorithms for each modality, each multi-modal/intcgratcd modality, etc. In one embodiment, each algorithm may include weakness factors related to, for example, environmental conditions, profile specifics, effectiveness (e.g., iris recognition algorithm is not as successful in lower lighting levels as with natural day light), etc.

In one embodiment, the algorithms may be updated on an ongoing basis. For example, based on experience with the user and/or with other users, weakness factors, weighting, thresholds, etc. may be modified and/or adjusted as is necessary and/or desired. In one embodiment, a wide variety of biometric algorithms may provide different accuracy and performance trade-offs. For example, some face recognition algorithms may perform better in natural light, while others may perform better in artificial lighting. Similarly, some voice recognition algorithms may exhibit superior performance in environments with certain noise characteristics, but not in others.

The user of multiple profiles enhances security. For example, by not restricting the user profile to one instance, the spoofing risk is reduced as the spoofer, or imitator, cannot immediately replace all n profiles by a one-time hack of an account. Even if one instance of the profile is hacked, and a fake profile generated, the remaining n-1 profiles will remain intact and prevent authorization.

In one embodiment, all n profiles may be checked by the system for consistency every time a new profile is generated, on a regular basis, etc. The existence of a new, hacked profile may result in a security review.

For example, in one embodiment, a consistency check may be performed each time a biometrics authentication session is initiated. In another embodiment, consistency checks may be performed periodically. In another embodiment, consistency checks may be performed randomly. In still another embodiment, the frequency of consistency checks may be based on the profile data, a risk profile of the user (number of devices user, variation of profiles, job function, risk profile of transactions), the type of transaction, etc. Any or all of the above may be used as is necessary and/or desired.

When a user's biometrics are captured for authentication purposes, the acquired biometrics may be compared to some, or all, of the n profiles. For each biometrics capture, markers, an algorithm, and an algorithm threshold may be selected. In one embodiment, inter-biometrics links for integrated biometrics may be selected. For example, the system may link the biometrics markers spatio-tcmporally (i.e., distance and time) in different modalities. These links or inter-biometric markers may indicate unique patterns that specifically describe the relationships between markers (both in terms of distances and in terms of precise timing of these markers).

For each of the n profiles, a score is generated, and an algorithm and data confidence score factor is generated. In one embodiment, the data confidence score factor may be a metric score that specifically focuses on the matching confidence calculated by the customized algorithms, customized set of thresholds, and markers selected for the profile. Spoofing risk-factors, which account for the possibility of a different risk/type of spoofing for each given modality, algorithm, and environmental factors may be applied. For example, it may be more likely for an image than a voice biometric to be spoofed.

As a result, a confidence score for each of the n profiles may be generated.

The confidence score for each of the n profiles may then be compared to a lower threshold and an upper threshold. If the confidence score is between the upper and lower thresholds, then the biometrics may be re-captured. In one embodiment, this may be the side or profile view of the user's facial biometrics, which can be acquired through the mobile device.

If the confidence score is above the upper threshold, or below the lower threshold, then a combined confidence metric based on the vector of each user profiles and associated confidence scores are calculated. For example, a confidence score that is above the upper threshold indicates that the biometrics algorithms indicate a strong match. On the other hand, a confidence score that is lower than the lower threshold indicates that the biometrics algorithms indicate a very weak match, one that is far from the users stored biometrics profile data.

As time progresses, the user's profile may be updated. For example, with each access, the subtle changes that take place with aging may be accounted for.

In one embodiment, the system may be able to adjust a profile for a user that was acquired using a first device to account for differences in a second device. For example, if a biometric profile is acquired using an iPhone, the system may be able to "predict" the profile that may be captured with a second device (e.g., a Samsung Galaxy).

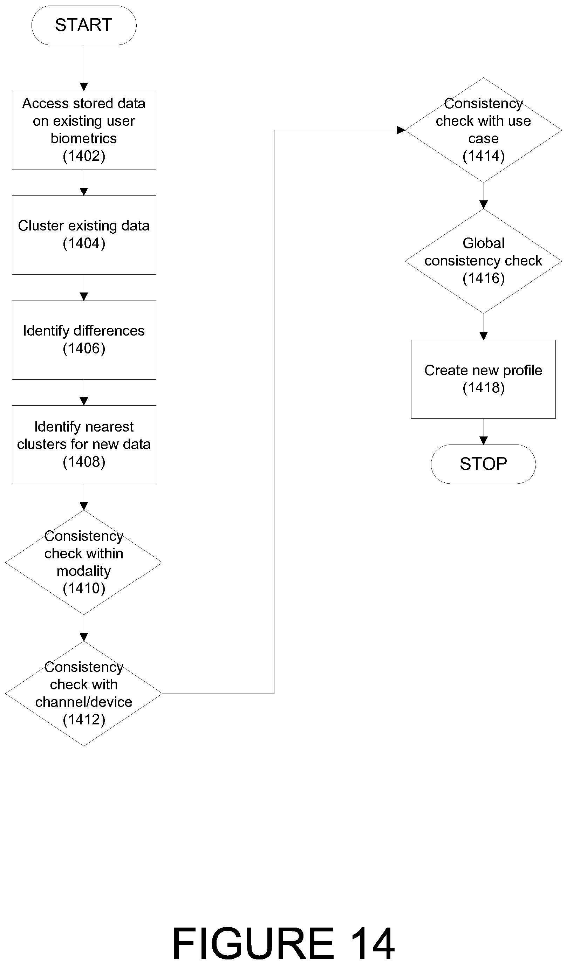

Referring to Figure 14, a flowchart depicting a method for automatically generating a user profile according to one embodiment is provided.

In step 1402, stored biometric data for the user may be accessed. In one embodiment, all existing biometric data for the user may be accessed. In another embodiment, only some of the existing biometric data may be accessed. For example, only biometric data that is within a certain age (e.g., 1 year, 1 month, 1 week, etc.) may be accessed. In another embodiment, only biometric data of a certain type (e.g., voice, facial, finger print, etc.) may be accessed. Any suitable amount of existing data, type of existing data, etc. may be used as necessary and/or desired.

In one embodiment, data regarding the capture device, such as device type (e.g., iPhone 5, Samsung Galaxy, etc.), camera resolution, microphone characteristics, hardware/software specifics, etc. may be retrieved as necessary and/or desired.

In step 1404, existing biometric data may be "clustered." In one embodiment, the data may be grouped into groupings having a statistically significant correlation level. For example, a "nearest neighbor-based cluster" may be created where the distances are calculated based on Euclidean distance between the data points (or other distance metrics depending on the modality).

In one embodiment, existing data in nearest neighbor clusters for individual modalities may be clustered. The allowable variance between data in the clusters, and across different clusters, may be specified by, for example, a security policy. For example, a security policy may constrain the user to use a specific set of devices and models and other types of devices may not be accepted. For example, if the security policy only allows for iPhones, data from a Samsung or other device will not be accepted as this does not comply with the security policy.

In another embodiment, a security policy may not permit users to create profiles or modify profiles with face biometrics changes (e.g., ones with beards, mustaches, etc.). Rather, those policies must be created by the organization, may require additional authorization/approval, etc.

In one embodiment, the security policy also may specify how much variation is allowed among different profiles. For example, in a high security environment, such as an investment bank, the variation may be limited to <10%. In a lower security environment, such as social networking, the authentication the variation may be up to 20%. Biometric profile variation may be calculated as a combined metric of delta variation between markers in individual or integrated biometrics modalities.

In step 1406, differences between newly acquired biometric data and stored data may be identified. By comparing the newly acquired data with stored data a simple differential profile is created. This provides information on what biometrics markers are varying in this profile. For example, if the new profile is created for a user with glasses, the biometrics markers around the eye will likely appear in the differential, while other markers will be substantially the same.

In one embodiment, consistency checks within the clusters, and between clusters, may be performed. Consistency checks within a cluster involve checking biometrics markers within a single profile. For example, if a profile is dedicated to the user with glasses, the data for all instances of users biometrics with glasses should be substantially consistent. Consistency checks are performed for each new acquisition of biometrics data. In addition regular consistency checks are performed to ensure consistency within individual profiles and across multiple profiles.

Consistency checking among clusters checks the match across multiple profiles. For example, if the biometrics markers around the nose are inconsistent between a profile with glasses and a profile without glasses, this may be flagged as an inconsistency. If the difference exceeds a predetermined threshold, this may be marked or flagged for further review, notification, etc.

In step 1408, the nearest clusters for new biometric data are identified. For example, newly acquired biometrics data may be compared against existing clusters by comparing the distance between the data and individual clusters based in multi-dimensional vector space based on Euclidean distance or other distance metrics based on the biometrics modality.

In step 1410, the acquired biometric data may be checked for consistency within the modality. In one embodiment, a check may be made to see if any unchanged markers arc consistent. In another embodiment, a check may be made to see if the changed markers are consistent with each other.

In step 1412, the acquired biometric data may be checked for consistency within the channel and/or device. In one embodiment, a check may be made to determine if the new biometric data is consistent with an expected resolution for the capturing device (e.g., to verify the camera), sample rate for the capturing device (e.g., to verify the microphone and/or processing hardware/software), etc.

In step 1414, the acquired biometric data may be checked for consistency within the use case. For example, the new biometric data may be checked for anomalies the location that the sample was taken (e.g., a GPS location), for noise characteristics, lighting characteristics, etc.

In step 1416, a global consistency check may be performed. In one embodiment, the system may determine whether the different biometric profiles, the data within a profile, and the modalities in each data set are consistent with each other. In one embodiment, although there might be variation in different user profiles, these individual profiles or data in each profile cannot be inconsistent. A global consistency check performs a consistency check across different profiles as well as within each profile in each modalities. This may be different from regular consistency checks that occur within the modality, within the profile, etc.

In step 1418, a new profile maybe created. In one embodiment, the algorithm that is associated with the profile, threshold specifications, etc. may be adjusted for the new profile.

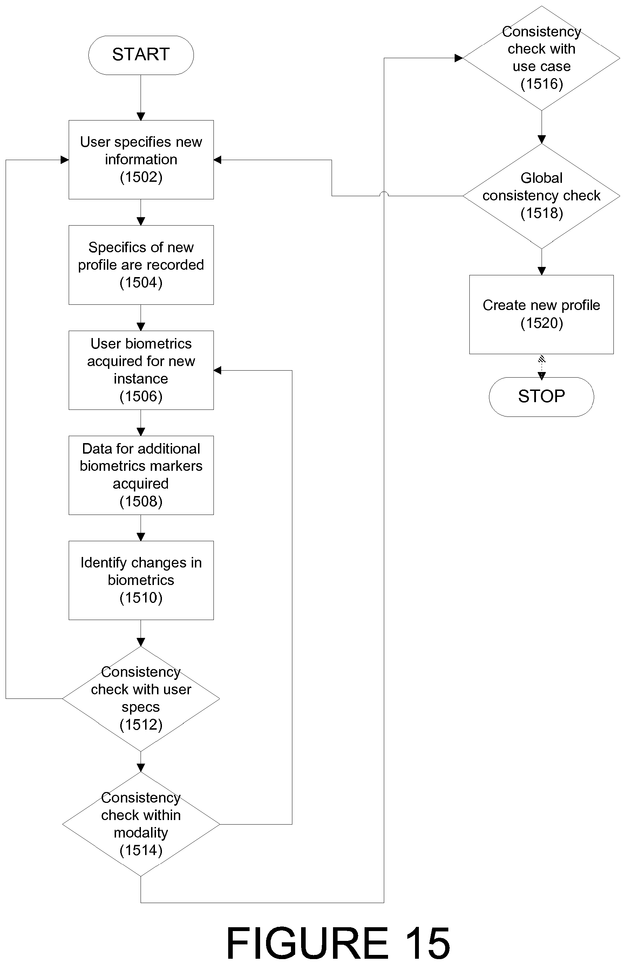

Referring to Figure 15, a flowchart depicting a method for manually generating a user profile according to one embodiment is provided.

In step 1502, the user provides information on a new profile. In one embodiment, the user may specify the new biometrics data that will be provided (e.g., face, fingerprint, voice, etc.). and may specify the reason for the new biometric data (e.g., in response to face surgery, beard, glasses, etc.). In another embodiment, the user may also specify a new device and/or channel (e.g., a new smart phone, microphone, software on the smartphone, ctc.). In still another embodiment, the user may specify a new use case (e.g., a new location, environment, surroundings, such a noisy environment, a well-lit environment, etc.). Any one or combination of these (e.g., a new facial biometric capture with a new device) or other specifics may be used as necessary and/or desired.

In step 1504, the specifics of the new profile may be recorded. In one embodiment, the user may specify alterations in biometric characteristics to be captured (e.g., wearing glasses, etc.), alterations in devices (e.g., different camera on device), different use cases (e.g., different noise levels, lighting levels, etc.). Other alterations may be specified as necessary and/or desired.

In step 1508, new existing data may be clustered. In one embodiment, existing data in nearest neighbor clusters for individual modalities may be clustered. The allowable variance between data in the clusters, and across different clusters, may be specified by, for example, a security policy. This may be similar to step 1404, above.

In step 1506, the new biometric data is captured. In one embodiment, the new biometric profile may be captured using a known device, a new device, etc.

In step 1508, data for additional biometrics markers may be acquired. In one embodiment, this data may be acquired for potential compensation. By acquiring additional and complementary biometrics data through the interactive session, the system may improve the confidence level of the user's identity as specified by biometrics data.

In step 1510, changes to the biometric data are identified for each modality. In one embodiment, any data that exceeds a predetermined threshold may be marked for additional review, notification, etc. In one embodiment, depending on the level of security threat, the marked biometrics session may be considered at the appropriate timeframe by the appropriate personnel, security screening apparatus, etc.. For high security applications, such as banking, it is considered immediately Specialized biometrics kiosks may be used for additional screening/verification. In addition, out-of-band authentication may be initiated where password authentication and different acquisition channels may be used for biometrics.

In step 1512, the acquired biometric data may be checked for consistency within the modality. In one embodiment, a check is made to see if any unchanged markers are consistent. In another embodiment, a check is made to see if any changed markers are consistent with each other. This may be similar to step 1410, above.

In one embodiment, if inconsistencies are identified, the user may be asked to re-enter specifics for the new profile in step 1502.

In step 1514, the acquired biometric data may be checked for consistency within the channel and/or device. In one embodiment, a check may be made to determine if the new biometric data is consistent with an expected resolution for the capturing device (e.g., to verify the camera), sample rate for the capturing device (e.g., to verify the microphone and/or processing hardware/software), etc. This may be similar to step 1412, above.

If, in one embodiment, if consistencies are identified, biometric data may be recaptured in step 1506.

In step 1516, the acquired biometric data may be checked for consistency within the use case. For example, the new biometric data may be checked for anomalies the location that the sample was taken (e.g., a GPS location), for noise characteristics, lighting characteristics, etc. This may be similar to step 1414, above.

In step 1518, a global consistency check may be performed. This may be similar to step 1416, above.

In step 1520, a new profile may be created. In one embodiment, the algorithm that is associated with the profile, threshold specifics, etc. may be adjusted for the new profile.

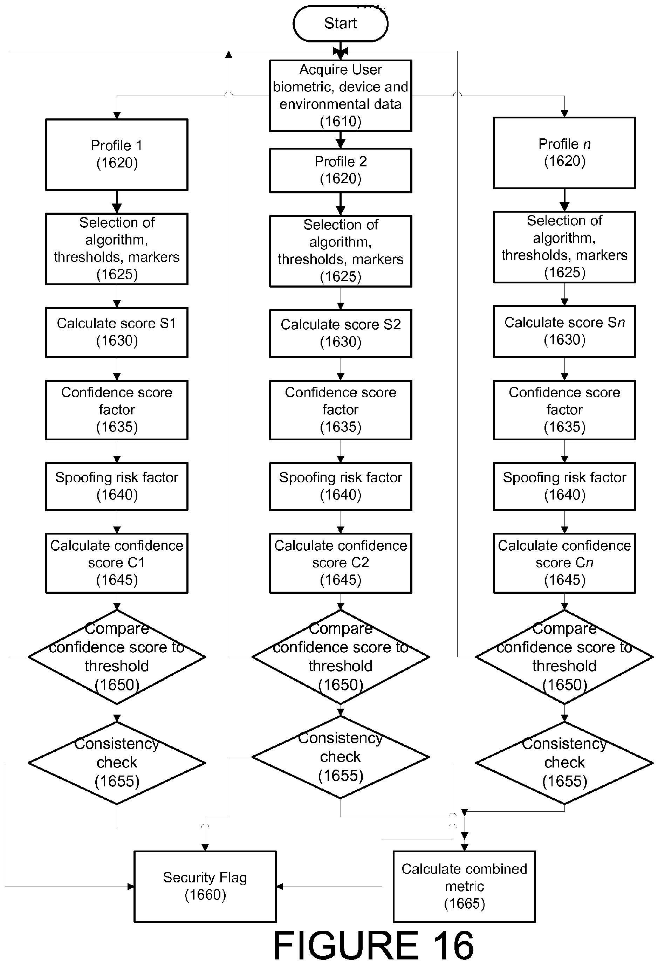

Referring to Figure 16, a flowchart depicting a method for high fidelity multi-modal out-of-band biometric authentication through vector-based multi-profile storage is provided.

In step 1610, the user's biometrics are acquired. This may be performed, for example, by the user's mobile device. In one embodiment, in addition to the biometrics, device information (e.g., type of device, specifications, etc.) may be acquired.

In one embodiment, environmental data (e.g., location information, time of day, lighting data, noise data, etc.) may be acquired. In one embodiment, different profiles or personas (e.g., office profile/persona, home profile/persona, travel profile/persona, etc.) may be used as necessary and/or desired. Examples of profiles or personas are disclosed in U.S. Provisional Patent Application Serial Number 61/831,358, filed June 5, 2013, and U.S. Patent Application Ser. No. 13/930,494 filed June 28, 2013, the disclosures of which are incorporated by reference in their entireties.

In step 1620, a first profile is selected to compare to the acquired biometric data.

In step 1625, a customized set of algorithms, thresholds, and markers may be selected. In one embodiment, these may be selected based on the type of profile (e.g., facial recognition versus voice recognition), limitations on the devices (e.g. camera resolution, clarity, etc.), environmental factors (e.g., lighting, noise level, etc.).

In step 1630, a score (S1) may be calculated for each of the n profiles.

In step 1635, a confidence score factor may be calculated for each of the n profiles.

In step 1640, a spoofing risk factor may be determined for each of the n profiles. In one embodiment, the spoofing risk factor may be based on the given modality, algorithm, and/or environmental factors.

In step 1645, a confidence score may be calculated for each for the n profiles.

In step 1650, the confidence score may be compared to the threshold. In one embodiment, if the confidence score exceeds a first threshold, then the method proceeds to step 1655. If the confidence score is between a first threshold and a second threshold, the acquisition process may be repeated. In one embodiment, a look up table that provides complementary markers and algorithms to improve the confidence score for the specific profile may be accessed. A new biometric acquisition process may collect data for these complementary markers. This interactive biometric acquisition process may iterate a number of times (i.e., k iterations) where k is higher for high security transactions.

If the confidence score is below the first and second threshold this may indicate that the acquired biometrics are so different from the profile that the person may not be a match. Biometrics data may be recaptured and additional biometrics information may be gathered depending on the security level of the application and characteristics of the captured data with respect to the specified thresholds.

In one embodiment, the confidence score is only one of several inputs that are considered. Thus, a high confidence score may not mean certain authentication.

Following the comparison, in step 1655, a consistency check may be performed. In one embodiment, the consistency checks may be similar to those described above.

If the consistency check is unsuccessful, in step 1660, a security flag (or similar indication) may be activated. In one embodiment, the profile may be flagged or marked. In another embodiment, the new data may be flagged or marked. In still another embodiment, both the profile and the new data may be flagged or marked. In one embodiment, the system may provide an alert or notification to the account owner, human security officer, etc. For example, the employee's management may be notified if the biometric authentication resulted in a transaction.

If the consistency check is successful, in step 1665 then the combined confidence metric may be calculated based on the vector of user profiles and their associated confidence scores C1 ... Cn.

In one embodiment, the following equation may be used:

Metric : F((Coeff 1) ^{∗} total confidence number, Coeff 2^{∗}(delta variation among confidence scores ), Coeff3^{∗} (#confidence over Threshold)) where Metric M is a function of total confidence, delta variation among confidence scores, and confidence over threshold with customized coefficients.

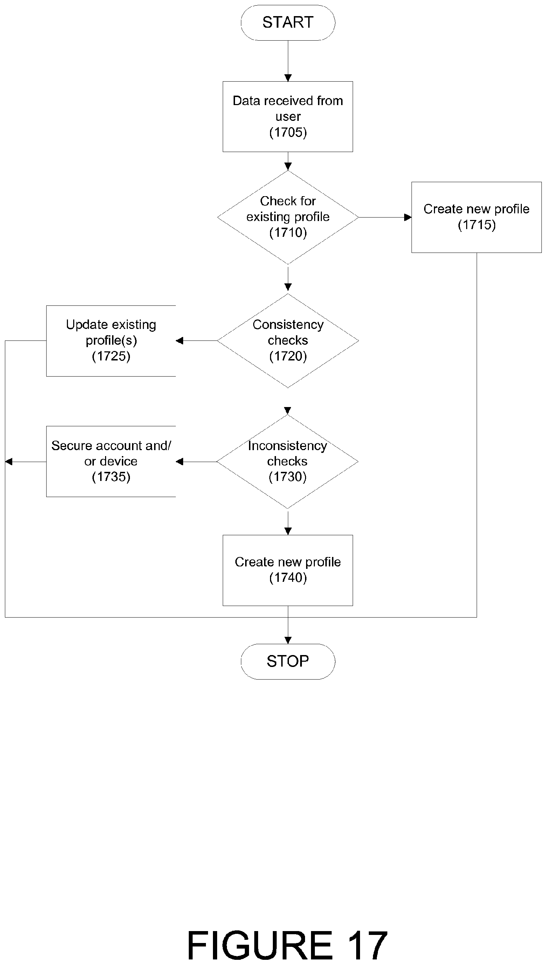

Referring to Figure 17, a method for the creation of multiple profiles for a user according to one embodiment is provided. In step 1705, data for the user may be received. In one embodiment, this data may include biometric data for the user (e.g., voice, facial, etc.) and may include device specifications for the device that is providing the data (e.g., device model, camera/microphone characteristics, etc.). Other data may be provided as is necessary and/or desired.

In one embodiment, the data may be provided as part of a registration step by the user. For example, this data may be provided by the user as part of a registration process.

In another embodiment, this data may be provided as part of an authorization attempt.

In still another embodiment, the user may be attempting to manually create a new profile. For example, the user may have just received a new style of glasses, and wants to create a new profile based on wearing the new glasses.

In step 1710, a check may be made to see if there is an existing profile for the user and/or device. In one embodiment, if there is no existing profile, indicating a new registration, in step 1715, the captured data may be used to create a profile for the user.

In step 1720, a check may be made to see if the new data is consistent with the existing profile(s). In one embodiment, consistency checks may be made with profiles that may be based on a biometric type or modality (e.g., facial, voice, etc.), a channel or device (e.g., iPhone, Galaxy, etc.), a use case (location, environment, surroundings, etc.), etc. In one embodiment, because some variation may be expected in these checks, the data may be deemed to be consistent if it is within a predetermined threshold. In another embodiment, an exact match may be required. Any other suitable method for determining consistency may be used as is necessary and/or desired.

In step 1725, if the data is deemed consistent with one of the profiles, in one embodiment, the existing profile may be updated to reflect the changes between the new data and the existing profile. In one embodiment, if the data is consistent with more than one existing profile, the existing profile that is closest (e.g., is the closest match) may be updated. In another embodiment, all existing profiles that are deemed to be consistent with the new data may be updated.

In another embodiment, the existing profiles may not be updated to reflect any differences.

If the data is not deemed to be consistent with any existing profiles, in step 1730, a check may be made to see if the data is inconsistent with the existing profiles. This may indicate that the user cannot be the same user that is stored in any of the existing profiles. In one embodiment, a comparison with a predetermined threshold may be used to determine if the new data is inconsistent. Any other suitable method for determining inconsistency may be used as is necessary and/or desired.

If the data is inconsistent, in step 1735, the account may be secured. In one embodiment, this may involve alerting an appropriate party, locking the account, locking the device, etc. Any other suitable security measure may be used as is necessary and/or desired.

If the data is not inconsistent, in step 1740, a new profile for the user may be created.

In one embodiment, a combination of both machine-based and human-based biometric authentication may be used.

Biometric matching algorithms may have limitations in certain modalities, and attackers, imposters, spoofers, etc. may leverage these limitations to design custom spoof attacks. For example, face recognition algorithms may have limitations in low lighting conditions, or in extremely bright conditions. In either situation, it may be difficult for the camera to "see" the features of the image that it is detecting, or for the algorithm to distinguish among biometric markers. Attackers may seek to exploit these limitations by, for example, wearing theater makeup, wearing masks, using pictures or replaying videos, etc. Although these attacks may be successful in defeating an algorithm-based system, the human brain has dedicated face processing regions that allows for a rapid and accurate processing to differentiate known faces from unknown faces. These processing regions may also detect theater make up, impersonations, etc. that an algorithm may not detect Thus, algorithm-based biometric security systems may be enhanced by including human cognition support.

In one embodiment, a system may incorporate a human cross-check as part of its biometric authentication process. For example, a human cross-check may be performed by individuals selected from a "confirmation list" of persons that may be selected by the user, the user's employer, the party ultimately responsible for the transaction, or at random.

In one embodiment, instead of a complete biometric and environment for a user (e.g., full facial features including hair, eyes, nose, ears, surroundings, etc.), biometrics "snippets" may be generated to protect the privacy of the user by providing only a part of the full biometric (e.g., eyes only, mouth only, face without background, upper portion of face, lower portion of face, etc.).

In another embodiment, a snippet may also be a short video clip that may be filtered to remove any private information (e.g., background, personal details, etc.) In still another embodiment, a snippet may be an audio record (after the details of the transaction are removed).

For example, after biometric data is captured from the user, biometrics data may be "cleaned" for privacy concerns by removing background information, non-biometric information (hair, etc.), background noise (e.g., surroundings, etc.), and all information that may not be related to the pending transaction. Multiple data snippets may then be created based on biometrics makers.

The system then may identify members of the user's confirmation list as well as the corresponding "connectivity score" for each member of the confirmation list. The connectivity score may consider, for example, a relationship between the user and reviewer (e.g., teammates, shared office, shared floor, shared building, family, friend, no relation, self-identification, etc.), length of time of the relationship, the last time the user and reviewer had met in person, the location of the user and reviewer (e.g., co-located in same building), etc.

For example, a person on the list who has worked with the user for 10 years will have a higher connectivity score than someone who has worked with the user for 1 month. Similarly, a person who does not know the user well, or at all (e.g., a low connectivity score) may be included on the confidence list only to verify that the user is not using makeup, a mask, a photo, etc. in an effort to defeat the algorithm. This person may not have a high connectivity score, but may be able to confirm that the image of the user is genuine.

After the automated biometrics authentication starts, the security system may initiate human based biometrics authentication by sending one or more snippets to one of more contacts from the confirmation list, and the one or more contacts are asked for confirmation. In one embodiment, this process may be "gamified" wherein the confirmation list members may receive points for a timely response (e.g., real-time or close to real-time), for reporting suspicious activities, etc.

In one embodiment, the one or more snippets may be transmitted to any suitable device, including mobile devices, desktop widgets, etc. In one embodiment, these devices may be registered to the reviewers, and the contacts may themselves be required to be authenticated to participate.

In one embodiment, each reviewer may receive one or more snippets that contain biometric data for one or more modality.

The system may then wait for one or more of selected contacts to respond. If a sufficient number of the selected contacts do not respond, or if the combined confidence level from the reviewers is below a predetermined threshold, additional contacts may be provided with the snippets.

In one embodiment, all selected contacts must confirm the identity or authenticity of the image of the user. In one embodiment, the confirmation must be above a predetermined confidence level threshold. In another embodiment, a majority may only need to confirm the identity or authenticity of the image of the user. The number of confirmations may depend, for example, on the risk and/or value of the requested transaction.

After the responses are received, the responses may be compiled based on modality and may be checked for consistency. For example, flags that were identified by more than one contact may lead to increased scrutiny. In cases where multiple users with high connectivity scores return low confidence scores, appropriate alarms may be created. Scores for individual modalities may be crossed checked with integrated biometrics modalities where multiple modalities are used.

The machine and human generated matching scores may then be merged, and the transaction may be authorized, provisionally authorized, denied, etc. or held for further processing. For example, different modalities and biometric markers may be ranked through human and machine-based biometrics authentication mechanisms. Depending on the modality and biometrics markers used, the system may receive confidence factors from a human-based authentication verification path where users rank the authentication by assigning confidence score and providing potential spoofing alerts, and from a machine-based authentication path where authentication algorithms may be used to calculate a confidence score.

In one embodiment, the transaction requested by the user may be provisionally authorized pending the confirmation by the one or more selected contacts.

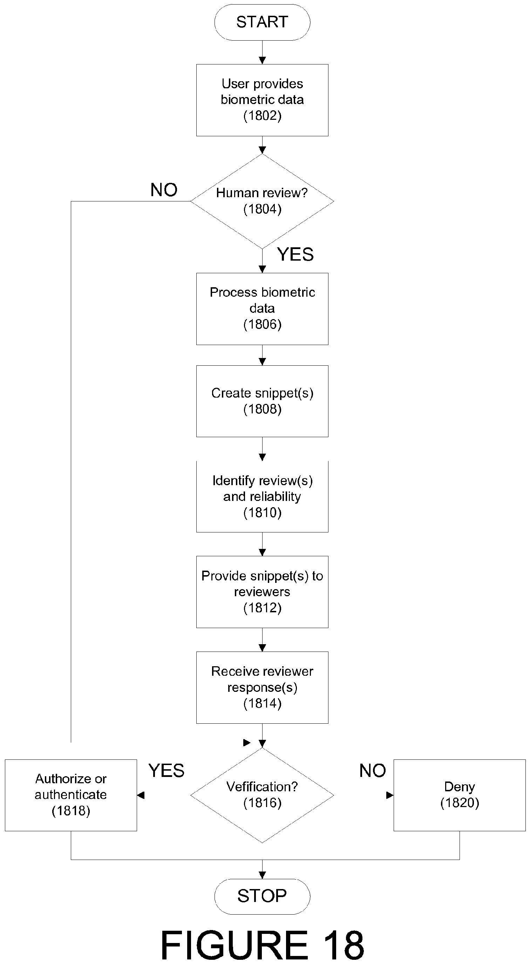

Referring to Figure 18, a flowchart depicting a method for multi-modal out-of-band biometric authentication through fused cross-checking technique according to one embodiment is provided. In step 1802, a user may request authentication and/or authorization. In one embodiment, the authentication/authorization may be to access an account, to access an area, to conduct a transaction, etc. In one embodiment, biometric data, such as an image, voice, behavior, etc. may be captured from the user. In addition, background information (e.g., location data, environment data, device data, etc.) may be captured.

Next, in step 1804, the system may conduct an algorithmic review of the captured biometric data. This may be as described, above.

In one embodiment, the algorithmic review may include determining if human review is necessary. For example, the system may consider the reliability of the algorithms for the selected modality, the risk and/or value of the requested transaction, the time since the last human review of the user, or any other suitable consideration. In another embodiment, anomaly detection algorithms may trigger human-based biometric authentication in cases where the user data does not match the profile data. In another embodiment, high-security applications may automatically trigger a combination of human/machine verified biometric authentication due to the nature of the transaction.

If human review is necessary, in step 1806, the biometric data may be processed for human review. In one embodiment, this may involve removing any sensitive data, such as removing background information, non-biometric information (e.g., hair, clothing, etc.), background noise (e.g., surroundings, etc.), and all information that may not be related to the pending transaction.

In step 1808, at least one snippet may be generated. For example, a snippet of the user's eyes only, mouth only, face without background, lower portion of the user's face, upper portion of the user's face, etc. may be generated.

In one embodiment, the snippets may be created based on machine-created marker flags. For example, customized biometric post-processing algorithms may be used to identify snippets with unique characteristics that can be used for biometrics authentication. Such snippets may include high activity periods where the user speaks, blinks, moves, etc. Snippets that are suspicious, or outliers, may be extracted and not used for verification.

In one embodiment, the snippets may have custom durations. The durations may be based on, for example, human cognition, privacy concerns, the severity of the marker flags, etc. For example, snippets may have customized length to enable positive identification by human or machine-based paths. A voice recognition verification path may require a snippet long enough for it be verified by human path (e.g. in the order of seconds).

For human review, the snippet may include face/voice/iris/ behavioral biometrics data that is also of a customized length to enable end users to verify the authenticity of the integrated biometrics snippet. Such snippets for human verification may be customized for human cognitive abilities through known science in the field and experimental analysis, historical data, or as necessary and/or desired. For example, snippets may be truncated to customized lengths to protect the user's privacy (e.g., voice snippets are truncated so that they do not reveal information on the transaction to be executed).

In another embodiment, snippets may be manually created from extracted data. This may be based on suspicious data or activity, anomalous behavior or other standard snippet creation techniques as described above.

In step 1810, one or more reviewers for the snippets may be identified. For example, the system may access a "confirmation list" for the user. This confirmation list may include individuals that know the user. In one embodiment, the individuals on the confirmation list may be identified by the user, by the employer, etc.

In one embodiment, the confirmation list may be automatically generated based on the known connectivity information. This may include, for example, enterprise and/or external social media connectivity information, the user's geographical collocation in terms of shared office spaces, the user's coworkers, project teammates, project management and other work connections, friends and family in trusted systems, etc. The algorithms may rank the connectivity strength, length of connection, how current the connection is, etc. to determine a "connectivity score" for each human reviewer. For example, if two users are connected through shared projects and office space for ten years and the connection is current, the connectivity score will reflect that confidence as compared to a new hire who has only connected with the user for the past two months and is located in a different city.

Each user may also be assigned a "confidence factor" based on their history of successfully identifying imposters and genuine biometrics authentication sessions. This may be achieved by collecting a historical profile of each human verifier and also through the gamification interface where the users collect points for successful authentications and identifying imposters. Gamification may also be achieved through the mobile device/applications that the users receive biometrics verification requests.

In one embodiment, random individuals that may have no relationship with the individual may be selected to review the snippets. In one embodiment, these individuals may simply be selected to confirm whether the snippet of the user appears to be genuine and not a spoofer (i.e., an imposter).

In one embodiment, the number of reviewers and/or threshold connectivity score for each reviewer may be determined based on, for example, the effectiveness of the algorithms for the selected modality, the risk and/or value of the requested transaction, the time since the last human review of the user, etc. For example, if a user has been using a home office for the past ten years and has no human reviewers with high connectivity scores, alternatives to face recognition, such as signature recognition, and/or additional reviewers may be requested.

In step 1812, once the reviewers and number of snippets are determined (note that the content of the snippets and the number of snippets provided to each reviewer may be different), the snippets may be distributed to the reviewers through available communication channels. In one embodiment, the snippets may be provided to the reviewers by email, instant message, text message, video message, or by any other suitable communication mode and/or channel. In one embodiment, the requests may be sent for each biometric verification path.

In one embodiment, the request for verification messages may be sent to mobile devices and request immediate verification (e.g., almost real-time) and processing of the request by the user to collect points (if used).

In one embodiment, some, or all, of the reviewers may be presented with the identity of the user with the snippets and asked to confirm the identity of the user. In another embodiment, some or all of the reviewers may be asked to confirm that the snippets appear to represent a real person.

The reviewers may review the snippets and may assign a certainty level to their review. The certainty level may be any suitable ranking, such as low-medium-high; a scale of 1-10, etc. In one embodiment, the reviewers may also mark any potential spoofs.

In step 1814, responses from the reviewers may be received. In one embodiment, all reviewers do not need to respond. For example, if one reviewer with a high connectivity score responds, that may be sufficient. The required number of responses, required connectivity score, required certainty levels, etc. may be based on, for example, the effectiveness of the algorithms for the selected modality, the risk and/or value of the requested transaction, the time since the last human review of the user, etc.

In one embodiment, if a sufficient number of reviewers do not respond, if the total confidence level does not exceed a confidence level threshold, if the total connectivity score does not exceed a connectivity score threshold, etc., the snippets may be sent to additional reviewers.

In one embodiment, each response may be weighted based on, for example, the reviewer's connectivity score, the reviewer's certainty level, etc. A combined score may then calculated.

In one embodiment, a consistency check among the received responses may be performed. In another embodiment, common flags, such as those associated with common issues, may be identified. For example, if more than one reviewer identifies anomalous data in the face recognition modality and returns flagged responses, additional security checks may be required.

As another example, if responses to voice biometric snippets are received, and multiple reviewers indicate suspicious voice data, the system may assess the activity as likely being spoofing. In one embodiment, a security flag may indicate such.

In step 1816, a verification check may be performed. In one embodiment, the algorithm-based scores and the human reviewer scores may be merged. In another embodiment, each score may be considered separately. The scores may be checked against a certain threshold. If the scores exceed the threshold, then in step 1818, the user may be authorized. If one of the scores does not exceed the threshold, in step 1820, the user may be denied.

In another embodiment, additional review, either human or machine, may be required.

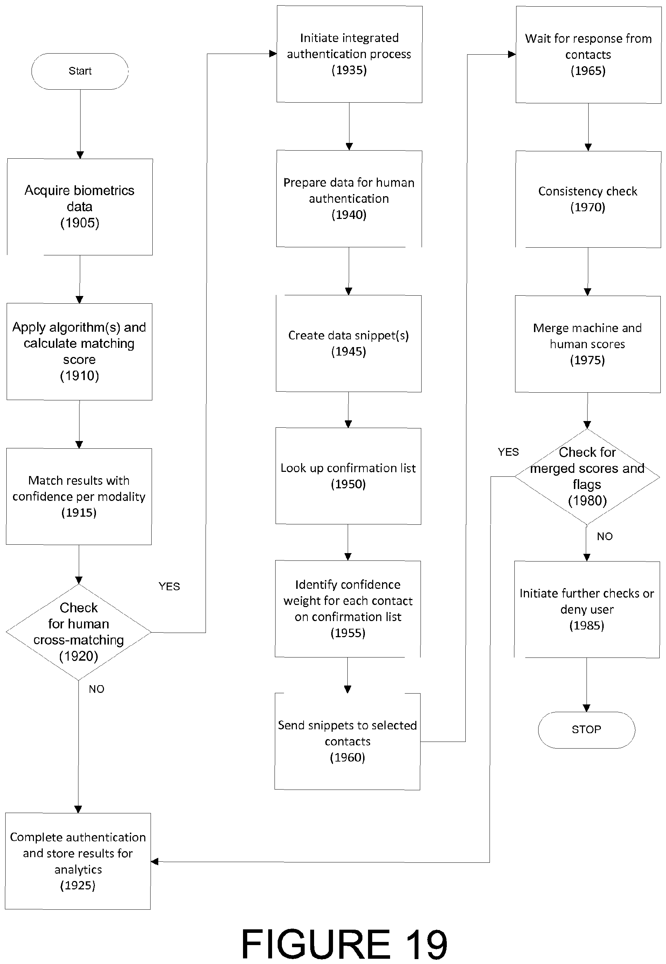

Referring to Figure 19, a detailed flowchart depicting a method for multi-modal out-of-band biometric authentication through fused cross-checking technique according to one embodiment is provided.

In step 1905, biometric data may be acquired from the user.

In step 1910, multi-modal biometric algorithms may be run on the biometric data to calculate a matching score.

In step 1915, different modalities and biometric markers may be ranked through human and machine-based biometrics authentication mechanisms. Depending on the modality and biometrics markers used in authentication, the system may receive confidence factors from both (1) human-based authentication verification, where users rank the authentication by assigning confidence score and providing potential spoofing alerts, and (2) biometrics authentication through integrated multi-modal authentication algorithms are used to calculate confidence score. For each modality and marker used in authentication, the confidence factors of individual paths are considered. For example, for a human biometrics authentication verification path H may be provided as follows:
□ (□k: Bio Marker or modality) Confidence score from user C(i, k) ^{∗} Connection Weight W(i, j, k) / Avg (Connection Weight) ^{∗} Threshold for Authentication session) indicates the confidence score of the authentication session;
where:
   - C(i, k) is confidence score from user i for bio marker or modality k;
   - W (i, j, k) indicates the connection weight between connection i, j for the modality/bio marker of interest k;
   - Avg Connection weight is the connection weight of connection for the user;
   - Threshold for Authentication session provides a system defined factor to threshold - it may be specific to the type of transaction, to employee privileges, other corporate security settings.

For a computer verification Path C, a matching score may be provided by the biometrics authentication algorithm.

The Overall Confidence Score may be the sum of the following:
(Vi: Bio Marker or modality) CH(i)^{∗} SH(i) + CC(i)^{∗} SC(i).

For each bio marker or modality i, a confidence score and spoofing score may be calculated per path and such scores are combined across paths where:
- CH(i) is the confidence score of path H for modality or bio marker i, SH(i) is the spoofing confidence score of Path H for modality i;
- CC(i) is the confidence score of Path C for modality i and SC(i) is the spoofing confidence score of Path C for modality i.

The equation may be extended to other paths with the addition of CA(i)^{∗}SA(i) for alternative authentication verification paths.

In step 1920, a determination may be made as to whether human cross-checking is necessary. This decision may be based on the risk, authorization sought, value of the transaction, prior experience with the user, policies, etc.

In step 1925, if human cross-checking is not necessary, authentication is complete and the results may be stored for analytics.

In step 1935, if human cross-checking is necessary, the integrated authorization process is initiated.

In step 1940, the biometric data may be prepared. This may be similar to step 1806, discussed above. In one embodiment, the data may first be cleared for privacy. This may involve one or more of removing all background images, removing non-biometrics information (e.g., hair, accessories, etc.), removing all background noise, and removing all information related to location, transaction information, etc. Additional privacy clearing may be performed as necessary and/or desired.

In step 1945, one or more data snippet may be created. This may be similar to step 1808, discussed above. In one embodiment, the snippets may be created based on machine-created marker flags. For example, N snippets each having a duration of t_{N} may be created. This may be in single mode or in integrated mode. In one embodiment, t_{N} may be a custom duration based on needs for human cognition, privacy, and marker flag severity.

In step 1950, the user's confirmation list may be retrieved. This may be similar to step 1810, discussed above. In one embodiment, the confirmation list may be stored at the corporate security server, or any other location. In another embodiment, the user may identify individuals for confirmation purposes at the time authentication is sought.

In one embodiment, the contacts may also be users who themselves may be verified through human interaction.

In step 1955, the connectivity score for each contact in the user's confirmation list may be retrieved. This may also be similar to step 1810, discussed above.

In step 1960, the N snippets may be sent to M selected contacts from the confirmation list. This may also be similar to step 1812, discussed above. In one embodiment, this may be sent by any suitable communication channel, such as personal mobile devices, desktop widgets, etc. In one embodiment, the snippets may be sent in real-time. In one embodiment, the contacts may be asked for confirmation scores.

In one embodiment, the process may be "gamified," whereby the contacts may report suspicious parts for points. In one embodiment, the points may be awarded only when the suspicious activity is confirmed. For example, users may gain points for each successful verification session. They may also gain extra points for identifying spoofs, for responding immediately, etc. Each user may have verification profiles and rankings based on their historical successes. For example, some users may be higher ranked in face recognition or behavioral biometrics while others may be higher ranked in voice biometrics.

Contacts may also be asked to review overall biometrics authentication session data, such as where a user is connecting from GPS data, time for authentication, the request for transaction, length of the session, etc. to potentially detect anomalies.

Contacts may also review the environmental factors (such as background noise, lighting, etc.) to completely disqualify the biometrics authentication session.

In step 1965, responses from the contacts may be received. This may be similar to step 1814, above. In one embodiment, if a sufficient number of contacts do not respond, if the total confidence weight does not exceed a confidence weight threshold, etc. the snippets may be sent to additional contacts.

In step 1970, a consistency check among the received responses may be performed. This may be similar to step 1816, above. For example, if two high connectivity score contacts have significantly different certainty levels, such as one indicating an unusually low certainty in voice biometrics and high certainty in face biometrics and, while the other is exactly the opposite, the system may identify this as a potential inconsistency.

In step 1975, a verification check may be performed. This may be similar to step 1816, above. In one embodiment, the algorithm-based scores and the human reviewer scores may be merged. In another embodiment, each score may be considered separately.

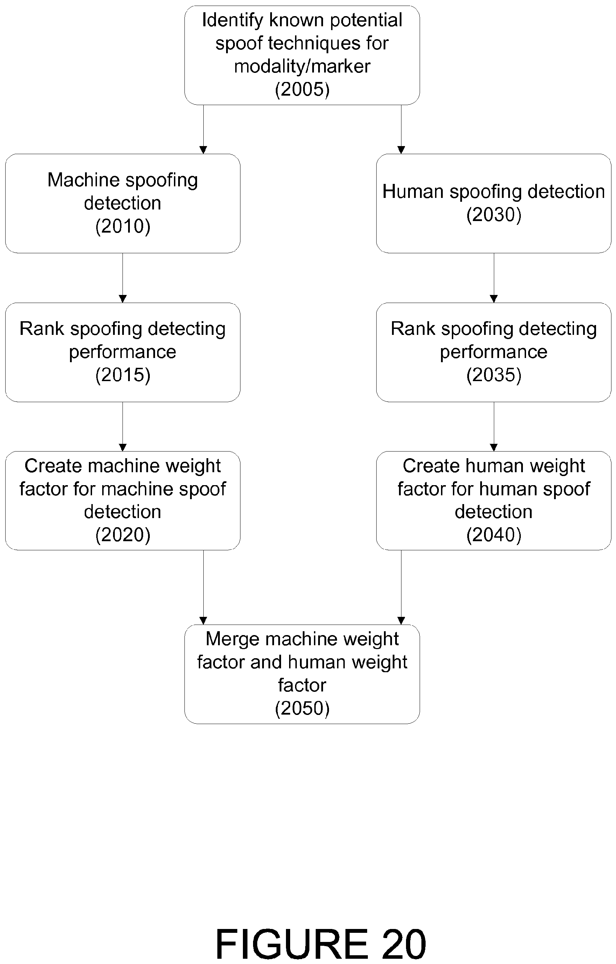

In one embodiment, the verification check may include the application of weighing factors for spoof detection. One such embodiment is illustrated in Figure 20, described below.

In step 1980, a check for merged scores and flags is performed. In one embodiment, the scores may be checked against a certain threshold. If the scores exceed the threshold, then in step 1925, the user may be authorized and the results may be store for analytics. If one of the scores does not exceed the threshold, in step 1985, the user may be denied or additional checks may be performed.

Referring to Figure 20, a method of factoring in strengths and limitations of automated and human biometrics authentication processes is provided. In step 2005, each biometrics modality and/or biometrics marker is taken into consideration in terms of potential spoof techniques. For example, spoof techniques for human review (e.g., makeup, photos, etc.) and machine review (e.g., playback, etc.) may be identified.

In step 2010 and 2030, each biometrics marker/modality may be evaluated using historical biometrics authentication data and targeted experiments. In step 2010, for machine spoof techniques, historical and/or experimental data for spoof attempts is retrieved, and, in step 2015, the effectiveness of the spoof detection technique/algorithm is determined.

In step 2020, historical and experimental data may be used to rate the success rate and spoofing risk for individual modalities and/or markers for machine-based biometrics authentication. Based on the effectiveness, a machine weight factor for the spoof detection techniques may be created.

For example, machine-based biometrics authentication is experimentally more successful in analyzing integrated biometrics that rely on the cross-references and precise timing among multiple modalities. Such timing is typically in the order of milliseconds and not suitable for human detection. Machine-based biometrics authentication is significantly higher accuracy for iris recognition compared to human based alternative.

A similar process is performed for human spoof detection in steps 2030-2040.

In step 2050, the machine weight factor and the human weight factor may be merged. Historical and experimental data may highlight the strengths and weaknesses of human verification. For example, face biometrics are typically rapidly and accurately processed by high connectivity individuals, including identifying spoofing techniques, such as theater or professional makeup, distorted/imperfect voice snippets (e.g. when user has nasal congestion, cold, etc.), etc.

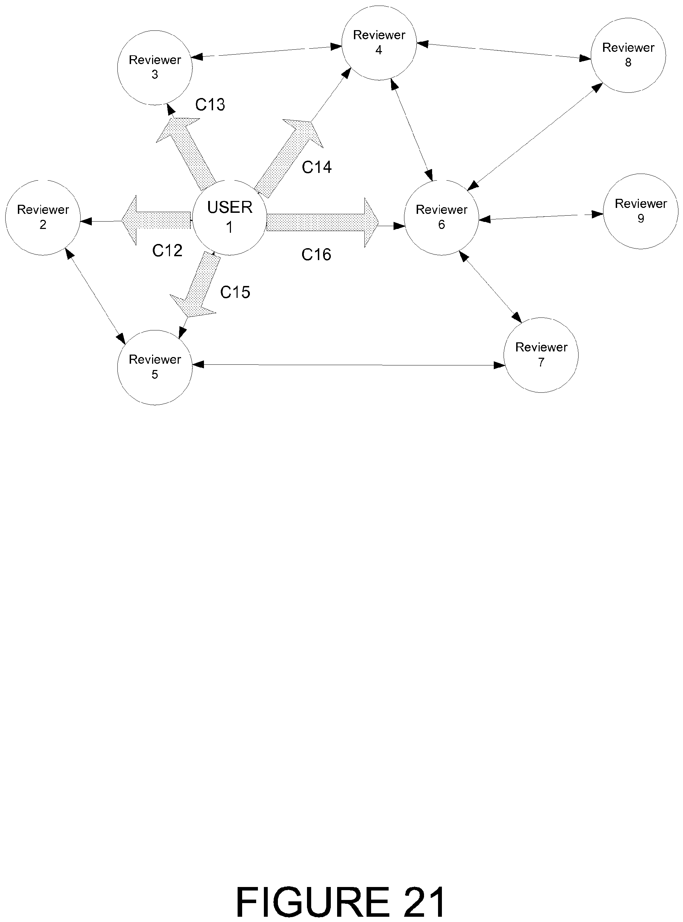

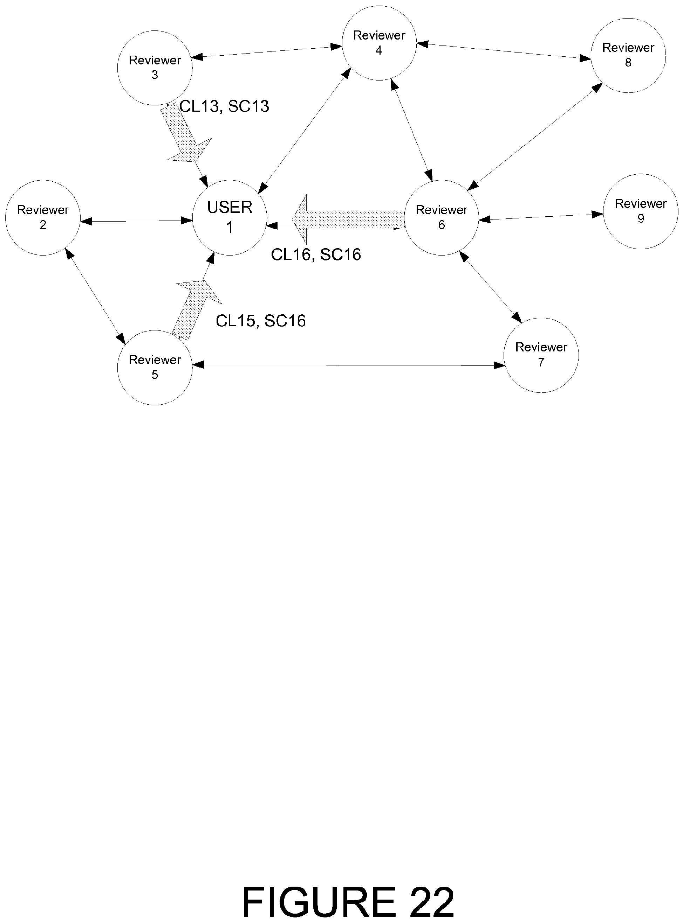

Referring to Figures 21 and 22, an example of the use of a "confirmation list" are provided according to embodiments. In this example, there are nine participants, with participant 1 being the user seeking authentication, and participants 2-9 being potential reviewers. As this is exemplary only, greater or fewer participants may be provided.

In one embodiment, the system may create connectivity graphs, such as that in Figure 17. The biometrics confirmation lists, connectivity and user profile information may reside, for example, on the server back-end of the system and may be represented in graph database or other alternative systems. The system may check the accuracy of this graph with internal "who-knows-whom" databases, human resources ("HR") records, etc. In another embodiment, the system may check social media connections, such as Facebook, Linkedln, etc. The connectivity graphs may be maintained with updated connectivity information and biometrics authentication sessions.

In one embodiment, each user may be represented as an "entity" in the graph, and each connection in the connectivity list may be represented as an line having one or two screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.
As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, *i.e.,* convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

Referring to Figure 22, an illustration of a response to User 1's review request is provided. Reviewers 3, 5 and 6 have all responded to the request, while Reviewers 2 and 4 have not.

In one embodiment, each user's response may include a certainty level (CL), a session confidence score (SC), and a spoof indicator (S). As noted above, the certainty level represents each reviewer's certainty in his or her assessment of the snippets. For User 3, this value is CL13.

Next, the session confidence score of the authentication verification. This may be based on the background noise, lighting, etc. For User 3, this value SC13.

In one embodiment, the session confidence score may be part of the certainty level.

Next, a spoofing indicator may be provided. For example, the spoofing indicator may indicate whether or not the reviewer thinks that the snippet represents a spoof. The spoof indicator may be a flag, a comment, etc.

The total weight of the three responses (from Users 3, 5 and 6) responses may be calculated as C13^{∗}CL13^{∗}SC13 + C15^{∗}CL15^{∗}SC15+ C16^{∗}CL16^{∗}SC16.

In one embodiment, if this total weight exceeds a threshold, then the process may continue. Session confidence scores are cross checked and factored into the total weight factors.

In one embodiment, the threshold may be based on the transaction type, risk, level of authentication sought, etc.

In one embodiment, if the total weight does not exceed the threshold, the system may wait for responses from the non-responding reviewers, additional reviewers may be identified, the user may be provisionally approved, etc. The action taken may depend on the risk, value, etc. associated with the authorization.

If the total weight meets or exceeds the threshold, confidence scores for each response may be considered. For example, each response may include the responder's assigned certainty levels, such as CL13 for reviewer 3, CL15 for reviewer 5, CL16 for reviewer 6, etc. In one embodiment, the certainty levels of one or more (or all) of the reviewers may be checked for consistency.

In one embodiment, if a reviewer provided special comments, details on certainty level, session confidence, or other notes, this information may be stored for security processing.

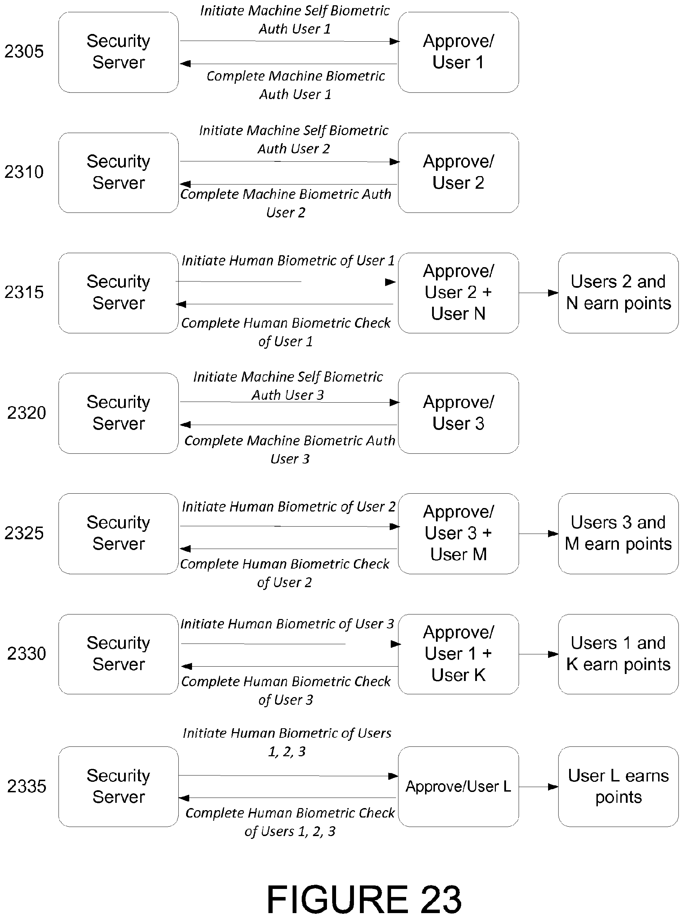

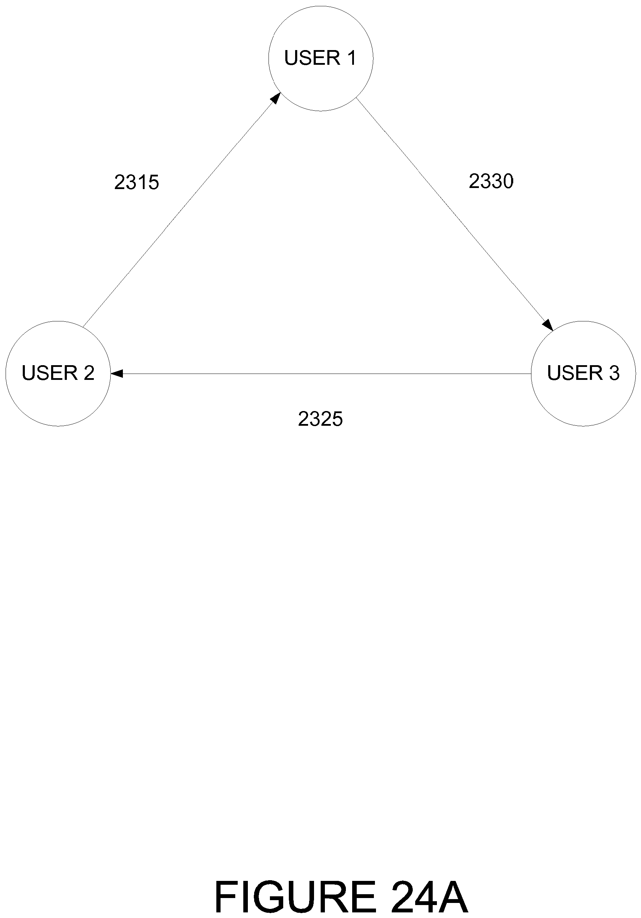

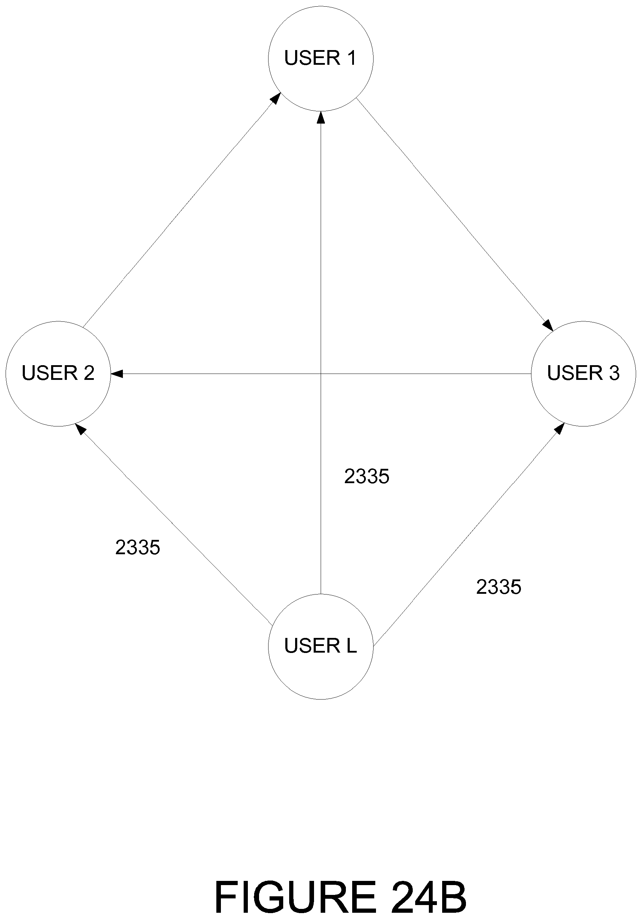

Referring now to Figure 23, a process flow of a high-risk transaction biometrics cross-checking process according to one embodiment is provided. Figures 24A and 24B graphically reflect aspects of this process flow, with Figure 24A reflecting the complementary authorization of users 1, 2 and 3, and Figure 24B reflecting the authorization of users 1, 2, and 3 by user L.

First, in step 2305, User 1 may be authenticated by the security server using machine analysis of biometrics as described above.

In step 2310, User 2 may be also authenticated by the security server using machine analysis of biometrics as described above.

In step 2315, User 1 may be authenticated by User 2 using human cross-checking, as described above. As a result, User 2 may earn points.

In one embodiment, additional users (e.g., User N) may also authenticate User 1 using human cross-checking as described above, and may earn points.

In step 2320, User 3 may be authenticated by the security server using machine analysis of biometrics as described above.

In step 2325, User 2 may be authenticated by User 3 (and Users M) using human cross-checking, as described above. As a result, User 3 and Users M may earn points.

In step 2330, User 3 may be authenticated by User 1 (and Users K) using human cross-checking, as described above. As a result, User 1 and Users K may earn points.

In step 2335, , User L may authenticate Users 1, 2, and 3 using human cross-checking, as described above. In one embodiment, User L may be a supervisor for Users 1, 2 and 3. In another embodiment, User L may be randomly selected. Any suitable User L may be used as necessary and/or desired.

As a result, User L may earn points.

The disclosures of the following are hereby incorporated, by reference, in their entireties: U.S. Patent Applications Serial Nos. 13/492,126; 13/297,475; 11/337563, 12/534,167; 10/867,103; 12/715,520; 10/710,315; 10/710,328; 11/294,785; and U.S. Patent Nos. 8,028,896 and 7,117,365.

Hereinafter, general aspects of implementation of the systems and methods of the invention will be described.

The system of the invention or portions of the system of the invention may be in the form of a "processing machine," such as a general purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement the invention may be a general purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the invention.

The processing machine used to implement the invention may utilize a suitable operating system. Thus, embodiments of the invention may include a processing machine running the iOS operating system, the OS X operating system, the Android operating system, the Microsoft Windows^{™} 8 operating system, Microsoft Windows^{™} 7 operating system, the Microsoft Windows^{™} Vista^{™} operating system, the Microsoft Windows^{™} XP^{™} operating system, the Microsoft Windows^{™} NT^{™} operating system, the Windows^{™} 2000 operating system, the Unix operating system, the Linux operating system, the Xenix operating system, the IBM AIX^{™} operating system, the Hewlett-Packard UX^{™} operating system, the Novell Netware^{™} operating system, the Sun Microsystems Solaris^{™} operating system, the OS/2^{™} operating system, the BeOS^{™} operating system, the Macintosh operating system, the Apache operating system, an OpenStep^{™} operating system or another operating system or platform.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further embodiment of the invention, be performed by a single component. Further, the processing performed by one distinct component as described above may be performed by two distinct components. In a similar manner, the memory storage performed by two distinct memory portions as described above may, in accordance with a further embodiment of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other entity; *i.e.,* so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software may might also be in the form of a collection of separate programs, a program module within a larger program, or a portion of a program module, for example. The software used might also include modular programming in the form of object oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, *i.e.,* to a particular type of computer, for example. The computer understands the machine language.

Any suitable programming language may be used in accordance with the various embodiments of the invention. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the invention. Rather, any number of different programming languages may be utilized as is necessary and/or desirable.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, *i.e.,* the software for example, that enables the computer operating system to perform the operations described above may be contained on any of a wide variety of media or medium, as desired. Further, the data that is processed by the set of instructions might also be contained on any of a wide variety of media or medium. That is, the particular medium, *i.e.,* the memory in the processing machine, utilized to hold the set of instructions and/or the data used in the invention may take on any of a variety of physical forms or transmissions, for example. Illustratively, the medium may be in the form of paper, paper transparencies, a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors of the invention.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, *i.e.,* convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

## Claims

1. **Authentication method** for multi-mode biometric authentication, the method comprising
receiving (240), at a computer application executed by a first electronic device (120) that is associated with a user, a machine-readable code captured by a first input device on the first electronic device (120), wherein the machine-readable code is presented by a second electronic device (110) and comprises a unique identifier for an access or browser session on the second electronic device (110);
receiving (240), at the computer application, an image of at least a part of the user from a second input device on the first electronic device (120);
receiving (240), at the computer application, a biometric from a third input device on the first electronic device (120);
communicating (250), by the computer application, the machine-readable code, the image of at least the part of the user, and the biometric input to a server (150) that is independent of the second electronic device for authentication;
wherein the server (150) authenticates (260) the user based on the image of at least the part of the user and the biometric, and communicates the authentication to the second electronic device (110) associated with the unique identifier; and
wherein the second electronic device (110) grants access (280) to the user in response to the authentication; and
wherein the first electronic device (120) is registered with the server (150).

2. Method of claim 1, wherein the first input device is a first camera.

3. Method of claim 1, wherein the second input device is a second camera.

4. Method of claim 1, wherein the third input device is
- a microphone, and the biometric is a voice biometric, or
- touch-sensitive, and the biometric is a finger biometric, or
- a behavioral biometric or a thermal biometric.

5. Method of claim 1, wherein the machine-readable code, the image of at least the part of the user, and the biometric are received in response to a user attempting to conduct a transaction that has a value above a predetermined value.

6. Method of claim 1, wherein the machine-readable code, the image of at least the part of the user, and the biometric are received in response to a user attempting to conduct a transaction that has a risk level above a predetermined risk level.

7. **System (100)** for multi-mode biometric authentication, the system comprising:
a first electronic device (120) associated with a user, wherein the first electronic device comprises a first input device, a second input device and a third input device, and is configured to execute a computer application;
a second electronic device (110); and
a server (150) that is independent of the second electronic device (110);
wherein the system (100) is configured to:
receive, at the computer application, a machine-readable code captured by the first input device, wherein the machine-readable code is presentable by the second electronic device (110) and comprises a unique identifier for an access or browser session on the second electronic device (110);
receive, at the computer application, an image of at least a part of the user from the second input device;
receive, at the computer application, a biometric from the third input device;
communicate, by the computer application, the machine-readable code, the image of at least the part of the user, and the biometric input to the server (150) for authentication;
wherein the server (150) is configured to authenticate the user based on the image of at least the part of the user and the biometric, and to communicate the authentication to the second electronic device (110) associated with the unique identifier; and
wherein the second electronic device (110) is configured to grant access to the user in response to the authentication; and
wherein the first electronic device (120) is registered with the server (150).

8. System of claim 7, wherein the first input device is a first camera.

9. System of claim 7, wherein the second input device is a second camera.

10. System of claim 7, wherein the third input device is
- a microphone, and the biometric is a voice biometric, or
- touch-sensitive, and the biometric is a finger biometric, or
- a behavioral biometric or a thermal biometric.

11. System of claim 7, wherein the machine-readable code, the image of at least the part of the user, and the biometric are configured to be received in response to a user attempting to conduct a transaction that has a value above a predetermined value.

12. System of claim 7, wherein the machine-readable code, the image of at least the part of the user, and the biometric are configured to be received in response to a user attempting to conduct a transaction that has a risk level above a predetermined risk level.

## Patentansprüche

1. **Authentifizierungsverfahren** für eine biometrische Multimodus-Authentifizierung, das Verfahren umfassend
Erhalten oder Empfangen (240) eines maschinenlesbaren Codes bei oder mit einer Computeranwendung, die von einer ersten elektronischen Vorrichtung (120) ausgeführt wird, die einem Benutzer zugeordnet ist, der von einer ersten Eingabevorrichtung (input device) auf der ersten elektronischen Vorrichtung (120) erfasst wird, wobei der maschinenlesbare Code von einer zweiten elektronischen Vorrichtung (110) dargestellt oder präsentiert wird und einen eindeutigen Bezeichner (unique identifier) für einen Zugang (access) zu der oder eine Browser-Sitzung auf der zweiten elektronischen Vorrichtung (110) umfasst;
Erhalten oder Empfangen (240), von der Computeranwendung, eines Bildes von mindestens einem Abschnitt des Benutzers von einem zweiten Eingabegerät auf dem ersten elektronischen Gerät (120);
Erhalten oder Empfangen (240), von der Computeranwendung, eines biometrischen Merkmals von einer dritten Eingabevorrichtung auf dem ersten elektronischen Gerät (120);
Übermittlung (250) des maschinenlesbaren Codes, des Bildes von mindestens dem Abschnitt des Benutzers und der biometrischen Eingabe durch die Computeranwendung an einen Server (150), der von der zweiten elektronischen Vorrichtung zur Authentifizierung unabhängig ist;
wobei der Server (150) den Benutzer auf der Grundlage des Bildes zumindest des Abschnitts des Benutzers und des biometrischen Merkmals authentifiziert (260) und die Authentifizierung an die zweite elektronische Vorrichtung (110) übermittelt, die dem eindeutigen Bezeichner zugeordnet ist; und
wobei die zweite elektronische Vorrichtung (110) dem Benutzer in Reaktion oder Antwort auf die Authentifizierung Zugang (280) gewährt; und
wobei das erste elektronische Gerät (120) bei dem oder am Server (150) registriert ist.

2. Verfahren nach Anspruch 1, wobei das erste Eingabegerät eine erste Kamera ist.

3. Verfahren nach Anspruch 1, wobei das zweite Eingabegerät eine zweite Kamera ist.

4. Verfahren nach Anspruch 1, wobei das dritte Eingabegerät
- ein Mikrofon ist, und das biometrische Merkmal ist ein biometrisches Merkmal der Stimme, oder
- berührungsempfindlich ist und das biometrische Merkmal ein biometrisches Merkmal des Fingers ist, oder
- ein biometrisches Verhaltensmuster oder ein biometrisches Wärmebild ist.

5. Verfahren nach Anspruch 1, wobei der maschinenlesbare Code, das Bild zumindest des Abschnitts des Benutzers und das biometrische Merkmal als Reaktion oder Antwort darauf empfangen werden, dass ein Benutzer versucht, eine Transaktion aus- oder durchzuführen, die einen Wert oberhalb eines vorbestimmten Wertes hat.

6. Verfahren nach Anspruch 1, wobei der maschinenlesbare Code, das Bild zumindest des Abschnitts des Benutzers und das biometrische Merkmal als Reaktion darauf empfangen werden, dass ein Benutzer versucht, eine Transaktion aus- oder durchzuführen, die ein Risikoniveau über einem vorgegebenen Risikoniveau aufweist.

7. **System (100)** zur biometrischen Multimodus-Authentifizierung, wobei das System Folgendes umfasst
eine erste elektronische Vorrichtung (120), die einem Benutzer zugeordnet ist, wobei die erste elektronische Vorrichtung eine erste Eingabevorrichtung,
eine zweite Eingabevorrichtung und eine dritte Eingabevorrichtung umfasst und so konfiguriert ist, dass sie eine Computeranwendung ausführt;
eine zweite elektronische Vorrichtung (110); und
einen Server (150), der von der zweiten elektronischen Vorrichtung (110) unabhängig ist;
wobei das System (100) so konfiguriert ist, dass es:
bei der Computeranwendung einen maschinenlesbaren Code empfangen, der von der ersten Eingabevorrichtung erfasst wurde, wobei der maschinenlesbare Code von der zweiten elektronischen Vorrichtung (110) dargestellt werden kann und einen eindeutigen Bezeichner für einen Zugang oder eine Browsersitzung auf der zweiten elektronischen Vorrichtung (110) umfasst;
in der Computeranwendung ein Bild von mindestens einem Abschnitt des Benutzers von der zweiten Eingabevorrichtung empfangen;
bei der Computeranwendung ein biometrisches Merkmal von der dritten Eingabevorrichtung zu empfangen;
durch die Computeranwendung den maschinenlesbaren Code, das Bild zumindest des Teils des Benutzers und die biometrische Eingabe zur Authentifizierung an den Server (150) zu übermitteln;
wobei der Server (150) so konfiguriert ist, dass er den Benutzer auf der Grundlage des Bildes zumindest des Teils des Benutzers und des biometrischen Merkmals authentifiziert und die Authentifizierung an die zweite elektronische Vorrichtung (110) übermittelt, die mit dem eindeutigen Bezeichner verbunden ist; und
wobei die zweite elektronische Vorrichtung (110) so konfiguriert ist, dass sie dem Benutzer in Reaktion auf die Authentifizierung Zugriff gewährt; und
wobei das erste elektronische Gerät (120) bei dem oder am Server (150) registriert ist.

8. System nach Anspruch 7, wobei das erste Eingabegerät eine erste Kamera ist.

9. System nach Anspruch 7, wobei das zweite Eingabegerät eine zweite Kamera ist.

10. System nach Anspruch 7, wobei das dritte Eingabegerät
ein Mikrofon ist, und das biometrische Merkmal ist ein stimmliches biometrisches Merkmal ist, oder
berührungsempfindlich ist und das biometrische Merkmal ein biometrisches Merkmal des Fingers ist, oder
ein biometrisches Verhaltensmuster oder ein biometrisches Wärmebild ist.

11. System nach Anspruch 7, wobei der maschinenlesbare Code, das Bild zumindest des Abschnitts des Benutzers und das biometrische Merkmal so konfiguriert sind, dass sie als Reaktion auf den Versuch eines Benutzers empfangen werden, eine Transaktion aus- oder durchzuführen, die einen Wert oberhalb eines vorgegebenen Werts hat.

12. System nach Anspruch 7, wobei der maschinenlesbare Code, das Bild von mindestens dem Teil des Benutzers und das biometrische Merkmal so konfiguriert sind, dass sie als Reaktion auf den Versuch eines Benutzers empfangen werden, eine Transaktion aus- oder durchzuführen, die ein Risikoniveau über einem vorbestimmten Risikoniveau aufweist.

## Revendications

1. **Procédé d'authentification** pour l'authentification biométrique multi-mode, le procédé comprenant
recevoir (240), au niveau d'une application informatique exécutée par un premier dispositif électronique (120) qui est associé à un utilisateur, un code lisible par machine capturé par un premier dispositif d'entrée sur le premier dispositif électronique (120), dans lequel le code lisible par machine est présenté par un second dispositif électronique (110) et comprend un identifiant unique pour un accès ou une session de navigation sur le second dispositif électronique (110) ;
recevoir (240), au niveau de l'application informatique, une image d'au moins une partie de l'utilisateur à partir d'un second dispositif d'entrée sur le premier dispositif électronique (120) ;
recevoir (240), au niveau de l'application informatique, une biométrie provenant d'un troisième dispositif d'entrée sur le premier dispositif électronique (120) ;
communiquer (250), par l'application informatique, le code lisible par machine, l'image d'au moins la partie de l'utilisateur, et l'entrée biométrique à un serveur (150) qui est indépendant du second dispositif électronique pour l'authentification ;
dans lequel le serveur (150) authentifie (260) l'utilisateur sur la base de l'image d'au moins la partie de l'utilisateur et de la biométrie, et communique l'authentification au second dispositif électronique (110) associé à l'identifiant unique ; et
dans lequel le second dispositif électronique (110) accorde l'accès (280) à l'utilisateur en réponse à l'authentification ; et
dans lequel le premier dispositif électronique (120) est enregistré auprès du serveur (150).

2. Procédé de la revendication 1, dans lequel le premier dispositif d'entrée est une première caméra.

3. Procédé de la revendication 1, dans lequel le second dispositif d'entrée est une seconde caméra.

4. procédé de la revendication 1, dans lequel le troisième dispositif d'entrée est
un microphone, et la biométrie est une biométrie vocale, ou
sensible au toucher, et la biométrie est une biométrie du doigt, ou
une biométrie comportementale ou une biométrie thermique.

5. Procédé de la revendication 1, dans lequel le code lisible par machine, l'image d'au moins la partie de l'utilisateur et la biométrie sont reçus en réponse à une tentative de l'utilisateur d'effectuer une transaction dont la valeur est supérieure à une valeur prédéterminée.

6. Procédé de la revendication 1, dans lequel le code lisible par machine, l'image d'au moins la partie de l'utilisateur, et la biométrie sont reçus en réponse à un utilisateur qui tente d'effectuer une transaction dont le niveau de risque est supérieur à un niveau de risque prédéterminé.

7. **Système (100)** pour l'authentification biométrique multi-mode, le système comprenant :
un premier dispositif électronique (120) associé à un utilisateur, dans lequel le premier dispositif électronique comprend un premier dispositif d'entrée, un deuxième dispositif d'entrée et un troisième dispositif d'entrée, et est configuré pour exécuter une application informatique ;
un deuxième dispositif électronique (110) ; et
un serveur (150) qui est indépendant du second dispositif électronique (110) ;
dans lequel le système (100) est configuré pour :
recevoir, au niveau de l'application informatique, un code lisible par machine capturé par le premier dispositif d'entrée, dans lequel le code lisible par machine est présentable par le second dispositif électronique (110) et comprend un identifiant unique pour un accès ou une session de navigation sur le second dispositif électronique (110) ;
recevoir, au niveau de l'application informatique, une image d'au moins une partie de l'utilisateur à partir du second dispositif d'entrée ;
recevoir, au niveau de l'application informatique, une biométrie provenant du troisième dispositif d'entrée ;
communiquer, par l'application informatique, le code lisible par machine, l'image d'au moins la partie de l'utilisateur, et l'entrée biométrique au serveur (150) pour authentification ;
dans lequel le serveur (150) est configuré pour authentifier l'utilisateur sur la base de l'image d'au moins la partie de l'utilisateur et de la biométrie, et pour communiquer l'authentification au second dispositif électronique (110) associé à l'identifiant unique ; et
dans lequel le second dispositif électronique (110) est configuré pour accorder un accès à l'utilisateur en réponse à l'authentification ; et
dans lequel le premier dispositif électronique (120) est enregistré auprès du serveur (150).

8. système de la revendication 7, dans lequel le premier dispositif d'entrée est une première caméra.

9. Système de la revendication 7, dans lequel le second dispositif d'entrée est une seconde caméra.

10. système de la revendication 7, dans lequel le troisième dispositif d'entrée est
un microphone, et la biométrie est une biométrie vocale, ou
sensible au toucher, et la biométrie est une biométrie du doigt, ou
une biométrie comportementale ou une biométrie thermique.

11. Système de la revendication 7, dans lequel le code lisible par machine, l'image d'au moins la partie de l'utilisateur, et la biométrie sont configurés pour être reçus en réponse à un utilisateur qui tente d'effectuer une transaction dont la valeur est supérieure à une valeur prédéterminée.

12. Système de la revendication 7, dans lequel le code lisible par machine, l'image d'au moins la partie de l'utilisateur, et la biométrie sont configurés pour être reçus en réponse à un utilisateur tentant d'effectuer une transaction qui a un niveau de risque supérieur à un niveau de risque prédéterminé.
